# EUROPÄISCHE PATENTSCHRIFT

(11) **EP 3 412 417 B1**
(45) Veröffentlichungstag und Bekanntmachung des Hinweises auf die Patenterteilung: **07.10.2020**
(21) Anmeldenummer: 18175476.3
(22) Anmeldetag: 01.06.2018
(51) Int. Cl.: B26D 7/01, B26D 1/00

(54) **SCHNEIDVORRICHTUNG SOWIE SCHNEIDVERFAHREN**
CUTTING DEVICE AND CUTTING METHOD
DISPOSITIF ET PROCÉDÉ DE COUPE

(30) Priorität: 02.06.2017 DE 102017112178
(43) Veröffentlichungstag der Anmeldung: 12.12.2018
(73) Patentinhaber: TVI Entwicklung und Produktion GmbH, 83052 Bruckmühl (DE)
(72) Erfinder: VÖLKL, Thomas, Brückmühl 83052 (DE); MAYR, Martin, 83549 Eiselfing (DE)
(74) Vertreter: Weickmann & Weickmann PartmbB

(56) Entgegenhaltungen:
- DE-A1- 4 310 832
- DE-A1- 19 823 413

## Beschreibung

### I. Anwendungsgebiet

Die Erfindung betrifft eine Schneideinheit zum Abschneiden von Scheiben von einem meist strangförmigen Ausgangsprodukt, etwa einem Lebensmittel-Strang wie etwa einem Wurst-Strang, einem Käse-Strang - dann meist mit über die Länge des Stranges gleichbleibenden Querschnitt - oder einem Frischfleisch-Strang - dann meist mit einem sich in der Länge verändernden Querschnitt.

### II. Technischer Hintergrund

Dabei wird ein Messer quer zur Längsrichtung des Stranges durch dessen Querschnitt hindurch bewegt und dadurch eine Scheibe abgeschnitten, und vor dem Abschneiden der nächsten Scheibe der Strang in Längsrichtung am Messer vorbei vorwärtsgeschoben entlang einer Auflagefläche oder entlang eines Rohres oder auch Formrohres für einen hinsichtlich seines Querschnittes ungleichmäßigen Strang, entweder bis zu einem Anschlag auf der bezüglich des Hauptteiles des Stranges gegenüberliegenden Seite des Messers oder am hinteren Ende gehalten und um ein Vorschubmaß gesteuert vorwärtsgeschoben.

Um die Effizienz der Schneidvorrichtung zu erhöhen ist es vorteilhaft, wenn der Strang mit so geringem Zeitversatz wie möglich nach Beenden des Abtrenn-Vorganges einer Scheibe vorwärtsgeschoben werden kann und seine Abtrenn-Position erreicht. Die Zeitspanne, also der Takt, zwischen zwei Schneidvorgängen kann hinsichtlich des Messers dagegen ohne größere Probleme sehr kurz gehalten werden.

Dabei sind unterschiedliche Messerformen einsetzbar, mit denen jeweils ein möglichst ziehender Schnitt erreicht werden soll, die jedoch hinsichtlich des Zeitpunktes, wann mit dem Schrittes Tisch des Stranges begonnen werden kann, unterschiedliche Vor- und Nachteile aufweisen:
Streifen-förmige oder Balken-förmige, insbesondere gerade, Messer, die für das Schneiden in ihrer Längserstreckung bewegt werden, besitzen aus Gewichtsgründen meist eine in Eintauch-Richtung in den Strang geringe Breite, jedenfalls geringer als der Querschnitt des Stranges, und müssen dann für das Zurückbewegen nach dem Beenden des Abtrenn-Vorganges zumindest mit ihrer stumpfen rückseitigen Kante auf Abstand zur Stirnfläche des restlichen Stranges gebracht werden, um mit dieser rückwärtigen Kante nicht an der Stirnfläche entlang zu schaben.

Selbst bei ausreichender Breite, also größer als der Querschnitt des Stranges, ist dies empfehlenswert, um ein Verschmieren sowohl der Rückseite des Messers als auch der vorderen Stirnfläche des Stranges zu vermeiden.

Kreisscheiben-förmige Messer, die um ihre zentrale Achse rotieren, müssen mit ihrer Achse erst mindestens um den Radius des Messers vom Rand des Querschnittes des Stranges in Querrichtung beabstandet werden, damit das Vorwärtsschieben des Stranges begonnen werden kann.

Aus den gleichen Gründen wie bei einem Balken-förmigen oder Streifenförmigen Messer empfiehlt sich zusätzlich ein Abheben des Messers vom Strang in Längsrichtung nach dem Ende des Abtrennungsvorganges.

Sichel-förmige Messer, die zu dem freien Ende hin insbesondere spitz auslaufen, geraten nach dem Beenden des Abtrennungsvorganges durch weiterdrehen sehr schnell aus der Überdeckung mit dem Querschnitt des Stranges, jedoch ist ihr Einsatz zusammen mit einer Anschlagplatte, die als Anschlag für den Strang dient, schlecht einsetzbar:
Denn in Längsrichtung betrachtet soll ja zwischen dem Außenumfang des Messers und der konkav geformten Funktionskante der Anschlagplatte ein Spalt vorhanden sein, der in Verlaufsrichtung dieser Funktionskante möglichst überall gleich breit ist.

Bei einem Sichel-förmigen Messer, bei dem der Radius seiner Schneidkante zur Rotationsachse des Messers im Verlauf der Schneidkante zunimmt, wäre dies nur zu erzielen, indem in Längsrichtung betrachtet die Anschlagplatte zumindest während des Schneidvorganges zusammen mit dem Sichelmesser verschwenkt wird, aber nicht mit dem Sichelmesser rotiert, um zwischen Ende des ersten Abtrenn-Vorganges und Beginn des zweiten Abtrenn-Vorganges für den vorwärtsgeschobenen Strang als Anschlag zu dienen.

Somit erfordert dies einen komplizierten mechanischen Aufbau.

In diesem Zusammenhang ist aus der DE 198 23 413 A1 ein plattenförmiges Messer bekannt, welches nur über einen Teil des Umfangs eine kreisförmige Außenkante aufweist, die als Schneidkante ausgebildet ist.

Auch die DE 431 10 832 A1 zeigt ein solches Messer, jedoch erstreckt sich dort die kreissegment-förmige Schneidkante über weniger als 180°, in der erstgenannten Schrift dagegen über annähernd 270°.

### III. Darstellung der Erfindung

### a) Technische Aufgabe

Es ist daher die Aufgabe gemäß der Erfindung, eine Schneidvorrichtung mit einem solchen Messer und insbesondere einer Anschlagplatte zur Verfügung zu stellen, sodass die Totzeiten zwischen zwei Abtrenn-Vorgängen möglichst kurz gehalten werden können, sowie ein diesbezügliches Verfahren.

### b) Lösung der Aufgabe

Diese Aufgabe wird durch die Merkmale der Ansprüche 1 und 18 gelöst. Vorteilhafte Ausführungsformen ergeben sich aus den Unteransprüchen.

Eine gattungsgemäße Schneideinheit zum Abschneiden von Scheiben von einem Produkt-Strang umfasst ein um eine Rotationsachse rotierbares, insbesondere plattenförmiges, Messer, dessen Außenkante, also der Umfang des Messers oder der Platte, über einen Schneidkantenbereich als radial nach außen spitz auslaufende Schneide ausgebildet ist, in aller Regel angeschliffen nur von einer Seite der Platte her.

Ein solches rotierendes Messer taucht zum Abschneiden einer Scheibe in Querrichtung in den Produktstrang - zurückversetzt von dessen vorderen Ende um die gewünschte Dicke einer Scheibe - ein und durchläuft den Strang vollständig, wodurch eine Scheibe abgetrennt wird.

Nach der Bewegung zurück in die Ausgangsposition kann eine weitere Scheibe abgetrennt werden.

Erfindungsgemäß ist - betrachtet in axialer Richtung, also in Richtung der Rotationsachse des Messers - dieser als Schneide ausgebildete Schneidkantenbereich, dessen Erstreckung in Umfangsrichtung kleiner ist als 360°, zumindest über einen Teil ein Kreissegment, dessen Krümmungsmittelpunkt die Rotationsachse des Messers ist.

Vorzugsweise steht der Rest des Umfanges abseits des Schneidkantenbereiches des insbesondere plattenförmigen Messers, der Restkantenbereich, nicht über den Flugkreis des Kreissegmentes des Schneidkantenbereiches vor, sondern befindet sich innerhalb, insbesondere ausschließlich innerhalb, dieses Flugkreises.

Insbesondere steht auch kein Bereich des Schneidkantenbereiches, insbesondere derjenige Bereich, der nicht kreissegment-förmig ausgebildet ist, über diesen Flugkreis vor, sondern befindet sich vorzugsweise innerhalb dieses Flugkreises.

Dadurch stellt also der als Kreissegment ausgebildete Teil des Schneidkantenbereiches den radial am weitesten von der Rotationsachse vorstehenden Bereich dar. Dadurch werden bei einer Schneideinheit besonders effiziente, zeitsparende Bewegungsabläufe beim Aufschneiden eines Stranges möglich wie später erläutert wird.

Ein Teil des Schneidkantenbereiches, insbesondere beide Endbereiche oder vorzugsweise nur der in Rotationsrichtung vordere Endbereich des Schneidkantenbereiches verläuft von dem Kreissegment aus radial weiter nach innen, und ist insbesondere gekrümmt mit einem geringeren Krümmungsradius als das Kreissegment.

In einer bevorzugten Ausführungsform nimmt dieser geringere Krümmungsradius zum Ende des Schneidkantenbereiches hin ab.

Dadurch wird das Eintauchen des Messers in den Strang erleichtert, und kann auch erst bei einem geringerem Abstand zwischen Rotationsachse des Messers und dem Querschnitt des Stranges erfolgen als bei einem über die gesamte Länge als Kreissegment ausgebildeten Schneidkantenbereich.

Vorzugsweise erstreckt sich der Schneidkantenbereich, insbesondere der darin befindliche kreissegment-förmige Bereich, über einen Umfangsbereich von mindestens 100°, besser mindestens 130°, besser mindestens 150°, besser mindestens 180° bezüglich der Rotationsachse.

Insbesondere erstreckt sich der Schneidkantenbereich, insbesondere dessen als Kreissegment ausgebildeter Bereich, über einen Umfangsbereich von höchstens über 280°, besser höchstens über 250°, besser höchstens über 200°, besser höchstens über 180° bezüglich der Rotationsachse.

Dies hat sich für viele Größenverhältnisse zwischen Durchmesser des Flugkreises und der größten Querschnitts-Erstreckung des Produktstranges als optimal erwiesen.

In der Regel sollte auch der Radius des Flugkreises mindestens doppelt so groß, besser dreimal so groß, besser viermal so groß sein wie die größte Quererstreckung des aufzuschneidenden Produktstranges.

Ebenso hat es sich als vorteilhaft erwiesen, wenn der geringste radiale Abstand des Umfanges des insbesondere plattenförmigen Messers, also des Restkantenbereiches, zur Rotationsachse maximal 80%, besser maximal 70%, besser maximal 60%, besser maximal 50%, besser maximal 40% des Radius des Kreissegmentes beträgt. Die Größe dieses Rücksprunges des Restkantenbereiches vom Flugkreis bedingt maßgeblich die möglichen Abläufe beim Aufschneiden des Stranges.

Der radiale Abstand des Restkantenbereiches zur Rotationsachse nimmt vorzugsweise vom Ende des Schneidkantenbereiches aus ab, insbesondere kontinuierlich ab, bis zum Erreichen eines Umfangspunktes des Messers, der den geringsten Abstand zur Rotationsachse besitzt.

Vorzugsweise ist in axialer Richtung betrachtet das Messer symmetrisch zu der durch die Mitte des Kreissegmentes oder die Mitte des Schneidkantenbereiches verlaufenden Durchmesserlinie ausgebildet, die dann die Symmetrielinie bildet.

Alternativ kann der Umfang des Messers auch unsymmetrisch ausgebildet sein, insbesondere dergestalt, dass beginnend von dem im Einsatz in Rotationsrichtung vorderen Ende des Schneidkantenbereiches der Restkantenbereich seinen Abstand zur Rotationsachse langsamer pro Winkelgrad abnimmt als beginnend vom hinteren Ende des Schneidkantenbereiches entgegen der Rotationsrichtung. Insbesondere kann der Verlauf des Restkantenbereiches teilweise eine radiale Verlaufsrichtung besitzen, oder eine radiale Richtung sogar zweifach oder öfter schneiden.

Dennoch sollte entlang der durch die Rotationsachse verlaufenden Symmetrielinie oder entlang der durch die Mitte des Kreissegmentes oder des Schneidkantenbereiches verlaufenden Durchmesserlinie das Messer in die beiden entgegengesetzten radialen Richtungen im rotierenden Zustand die gleiche Fliehkraft aufweisen.

Zu diesem Zweck kann das Messer - betrachtet in axialer Richtung - außerhalb des Kreissegmentes des Schneidkantenbereichs, also im Segment des Restkantenbereiches, einen Bereich mit gegenüber dem Rest des Messers erhöhten Flächengewicht entlang der Messerebene aufweisen, wobei in diesem Teilbereich das Flächengewicht gegenüber dem Rest des Messers vorzugsweise um mindestens 100%, besser mindestens 200%, besser mindestens 300%, besser mindestens 400% erhöht ist, insbesondere so erhöht ist und dieser Bereich dimensioniert und angeordnet ist, dass die vorgenannte Bedingung der gegenläufig gleich großen Fliehkräfte erreicht wird. Gleich gross bedeutet in diesem Zusammenhang eine Abweichung des größeren Wertes um nicht mehr als 5 % gegenüber dem kleineren Wert.

Vorzugsweise besteht der Grundkörper des Messers aus einer Platte mit zumindest über mehr als die Hälfte des Bereiches der Fläche des Messers gleicher Dicke der Platte, und der Bereich des erhöhten Flächengewichts wird erzielt, insbesondere durch ein an dem plattenförmigen Messer-Grundkörper angeordneten Zusatzgewicht, welches insbesondere innerhalb des Umfanges des Messergrundkörpers positioniert ist, zumindest zu mehr als 80%, besser zu mehr als 90%.

Alternativ kann das Messer einstückig hergestellt sein und durch Variation der Dicke in den verschiedenen Bereichen die Bedingung der gegenläufig gleichen Fliehkräfte entlang der Symmetrielinie erzielen, was jedoch einen erhöhten Materialverbrauch bei der Herstellung des Messers zur Folge hat.

Die Schneideinheit umfasst ein Grundgestell, an dem das Messer beweglich angeordnet ist, insbesondere drehbar um seine Rotationsachse.

Vorzugsweise umfasst die Schneideinheit auch eine Anschlagplatte, die am Grundgestell bzgl. der Rotationsrichtung des Messers stillstehend befestigt ist, und - betrachtet in axialer Richtung - sich vorzugsweise radial außerhalb, insbesondere vollständig radial außerhalb, des Flugkreises des Schneidkantenbereiches des Messers erstreckt.

Die Anschlagplatte dient als Anschlag für die vordere Stirnfläche des Produktstranges vor dem Abtrennen der nächsten Scheibe und befindet sich auf der bzgl. der Messerebene gegenüberliegenden Seite des Produktstranges.

Bei einem nur von einer der Hauptseiten des Messers her angeschliffenen Schneide ist die Messerebene diejenige Hauptfläche des Messers, die nicht angeschliffen ist, ansonsten die lotrecht zur Rotationsachse liegende Ebene, die durch die Schneidenspitze des Querschnitts der Schneide, also die Schneidkante, verläuft.

Messer und Anschlagplatte können auch - statt jeweils direkter Befestigung am Grundgestell - Bestandteil eines Schneideinheit-Gestells sein, welches beweglich am Grundgestell befestigt ist, insbesondere beweglich in radialer Richtung bezüglich der Rotationsachse des Messers.

Die Anschlagplatte kann bzgl. der Rotationsachse des Messers auch radial beweglich entweder am Schneideinheit-Gestell oder direkt am Grundgestell angeordnet sein und dabei insbesondere gesteuert beweglich angeordnet sein, sodass auch während des Betriebes der Schneideinheit eine radiale Relativbewegung zwischen Anschlagplatte und Messer möglich ist. Dadurch kann der in axialer Richtung betrachtete Schneidspalt, durch den die abzutrennende Scheibe austreten muss, zwischen Anschlagplatte und Messer in seiner Größe gesteuert werden.

Zu diesem Zweck ist der der Rotationsachse des Messers zugewandte Umfangsbereich der Anschlagplatte, die sogenannte Funktionskante, konkav gestaltet, insbesondere als konkaves Kreissegment.

In einer bevorzugten Ausführungsform besitzt das konkave Kreissegment der Anschlagplatte den gleichen oder einen höchstens um 20%, besser höchstens um 10%, besser höchstens um 5% von dem Krümmungsradius des konvexen Kreissegmentes des Messers abweichenden, insbesondere größeren, Krümmungsradius. Vorzugsweise ist der Krümmungsmittelpunkt des konvexen Kreissegmentes des Messers und der konkaven kreissegment-förmigen Funktionskante der Anschlagplatte identisch.

Die Anschlagplatte ist bzgl. der Rotationsachse des Messers in Querrichtung, insbesondere in radialer Richtung zur Rotationsachse, zumindest vor und nach dem Aufschneide-Betrieb der Schneideinheit einstellbar, vorzugsweise aber auch während des Betriebes der Schneideinheit und insbesondere während des Durchlaufens der Schneide durch den Querschnitt des Produktstranges veränderbar.

Eine diesbezügliche Steuerung, die zumindest alle beweglichen Teile der Schneideinheit ansteuert, muss dementsprechend ausgebildet sein. Dadurch ist es möglich, einerseits die Scheibendicke während des Aufschneide-Betriebes zu verstellen, andererseits den radialen Abstand zwischen Messer und Anschlagplatte sogar während jedes Durchtrennungs-Vorganges zu variieren, insbesondere gegen Ende des Durchtrennungs-Vorganges den radialen Abstand zu vergrößern.

Vorzugsweise umfasst die Schneideinheit auch eine Strangführung zum Heranführen des aufzuschneidenden Produktstranges sowie insbesondere einen Strangantrieb zum Bewegen des Produktstranges entlang der Strangführung in Richtung Messer, der Zufuhrrichtung.

Vorzugsweise ist die Strangführung und/oder der Strangantrieb ebenfalls an demjenigen Grundgestell befestigt, welches auch das Messer und ggfs. die Anschlagplatte trägt, oder welches das diese beiden Elemente umfassende Schneid-Gestell trägt.

Die Strangführung umfasst wenigstens eine Auflagefläche für den aufzuschneidenden Produktstrang, insbesondere eine wannenförmige Auflagefläche und bevorzugt ein - in axialer Richtung betrachtet - umfänglich geschlossenes Führungsrohr, welches der Produktstrang im Querschnitt vorzugsweise vollständig ausfüllt, beispielsweise weil der Produktstrang in dem Führungsrohr vorverpresst ist in Längs- und/oder Querrichtung.

Dadurch ist sichergestellt, dass der Produktstrang entlang seiner Längserstreckung überall die gleiche Querschnittsfläche und Querschnittsform besitzt.

Die Strangführung endet mit ihrem in Zufuhrrichtung vorderen, also zum Messer hinweisenden, Ende in axialer Richtung kurz, insbesondere unmittelbar, vor dem Messer auf der der Anschlagplatte gegenüberliegenden Seite des Messers.

Insbesondere ist der vorhandene axiale Abstand zwischen Messer und Strangführung so gering wie möglich gehalten, und liegt vorzugsweise unterhalb von 2 mm, besser unterhalb von 1 mm, besser unterhalb von 0.5 mm, um in diesem Bereich eine Aufweitung des Querschnittes des insbesondere unter Druck stehenden Produktstranges zu vermeiden.

### Der Strangantrieb kann auf unterschiedliche Art und Weise realisiert sein:

Eine übliche Variante ist ein linear in Längsrichtung der Strangführung, der Zufuhrrichtung, beweglicher Strangschieber, der gegen das vom Messer abgewandte, hintere Ende des Produktstranges drückt und diesen nach jedem Schnitt erneut gegen die dem Produktstrang zugewandte Kontaktfläche der Anschlagplatte drückt.

Es soll klargestellt sein, dass trotz der Begriffe "Anschlagplatte" oder "Plattenförmiges Messer" dies weder eine durchgehend geschlossene Platte sein muss, noch unbedingt eine ebene Kontaktfläche aufweisen muss und erst recht nicht überall die gleiche Dicke von der Kontaktfläche zur gegenüber liegenden anderen Hauptfläche aufweisen muss.

Der Strangschieber weist an seinem vorderen Ende einen Querschnitt auf, der insbesondere bei einem Führungsrohr als Tankfüllung den Querschnitt des Führungsrohres weitestgehend ausfüllt, mindestens zu 90%, besser zu 95%, besser zu 98%, besser zu 99%.

Der Strangschieber kann an seinem vorderen, dem Messer und damit auch dem hinteren Ende des Produktstranges zugewandten Endes auch Greiforgane zum Ergreifen und Festhalten des Stranges aufweisen, beispielsweise Krallen oder Spitzen, die quer zur Vorschubrichtung, der Zufuhrrichtung, verlaufen. Dadurch kann er den Produktstrang nicht nur in Vorschubrichtung vorwärts schieben, sondern auch Festhalten, damit der Produktstrang nicht durch andere Einflüsse, wie etwa Anhaften am Messer, unerwünschter Weise in Vorschubrichtung zusätzlich vorgezogen wird.

In Längsrichtung der Strangführung, der Zufuhrrichtung, betrachtet - wobei die Zufuhrrichtung vorzugsweise mit der Richtung der Rotationsachse des Messers übereinstimmt oder von dieser um höchstens 15°, besser um höchstens 5°, besser um höchstens 3° abweicht - ist das Messer in Querrichtung zur Zufuhrrichtung so angeordnet und beweglich, dass das plattenförmige Messer abhängig von seiner Lage und/oder momentanen Position seiner Rotationsachse
- in einer Schneidstellung den Querschnitt des zugeführten Stranges, insbesondere den Querschnitt des Führungsrohres, wenigstens teilweise, insbesondere vollständig, abdecken kann
   und/oder
- in einer Vorschubstellung mit diesem Querschnitt des zugeführten Produktstranges, insbesondere dem Querschnitt des Führungsrohres, nicht überlappt.

In Längsrichtung der Strangführung, der Zufuhrrichtung, betrachtet ist die Anschlagplatte so angeordnet und in Querrichtung zur Zufuhrrichtung so beweglich, dass die Anschlagplatte
- in einer Schneidstellung den Querschnitt des zugeführten Stranges, insbesondere den Querschnitt des Führungsrohres, wenigstens teilweise abdecken kann
   und/oder
- in einer Vorschubstellung mit diesem Querschnitt mindestens teilweise, vorzugsweise vollständig, überlappt.

Dadurch kann der gesamte Schneidvorgang so gesteuert werden, insbesondere wenn Messer und Anschlagplatte unabhängig voneinander steuerbar sind, insbesondere in axialer Richtung und/oder in Querrichtung, dass auch bei schwierigen Materialien eines Produktstranges, wie etwa sich in dessen Inneren ändernden Dichteverhältnissen, Elastizitäten und Ähnlichem, dennoch ein formhaltiges und gewichtsgenaues Abschneiden von Scheiben möglich ist.

Hinsichtlich des Verfahrens beim Abschneiden von Scheiben wird der Produktstrang über die Messerebene hinaus um ein definiertes Maß insbesondere bis zur Anschlagplatte vorwärts geschoben, nachdem, insbesondere unmittelbar nachdem, die in Rotationsrichtung des Messers radiale Hinterkante, insbesondere der hintere Begrenzungsradius des Schneidkantenbereiches, insbesondere des Kreissegmentes des Schneidkantenbereiches, den Querschnitt des Produktstranges verlassen hat.

Der Vorteil liegt darin, dass dies somit unabhängig davon begonnen werden kann, ob der Flugkreis des Messers - in axialer Richtung betrachtet - noch durch den Querschnitt des Produktstranges verläuft, also auch bereits dann, wenn sich die Rotationsachse des Messers noch nicht soweit von dem Querschnitt des Produktstranges entfernt hat, dass der Flugkreis nicht mehr den Querschnitt des Produktstranges schneidet.

Auf diese Art und Weise kann mit der Vorschubbewegung des Produktstranges früher begonnen werden als bei einem kreisförmigen rotierenden Messer, dessen Rotationsachse in einer Querrichtung zum Produktstrang, der Eintauch- und Rückzugs-Richtung hin und her bewegt wird und dadurch die Totzeit zwischen zwei Abtrennvorgängen verringert werden.

Für das Vorschieben des Produktstranges bis zum Erreichen der Anschlagplatte oder einer vorgegebenen axialen Sollposition steht dadurch mehr Zeit zur Verfügung, bis die in Rotationsrichtung radiale Vorderkante des Messers, insbesondere der vordere Begrenzungs-Radius des Schneidkantenbereiches, insbesondere des Kreissegmentes, wieder in den Querschnitt des Produktstranges eintaucht.

Eine weiterer Vorteil besteht darin, dass beim radialen Rückhub die Rotationsachse des Messers weniger weit vom Querschnitt des Produktstranges, insbesondere vom Querschnitt des Führungsrohres, weg bewegt werden muss als bei einem kreisscheiben-förmigen Messer, welches um eine Achse rotiert, die durch ihren Mittelpunkt verläuft.

### c) Ausführungsbeispiele

Ausführungsformen gemäß der Erfindung sind im Folgenden beispielhaft näher beschrieben. Es zeigen:
- **Figur 1a:**: eine erste Bauform des rotierenden Messers, betrachtet in Rotationsrichtung des Messers,
- **Figur 1b:**: eine zweite Bauform des rotierenden Messers in der gleichen Ansicht,
- **Figuren 2a - 2h:**: in axialer Richtung des Messers betrachtet eine Schneideinheit mit Messer, Anschlagplatte und Formrohr in unterschiedlichen Dreh- und Eintauchlagen des Messers,
- **Figuren 3a - 3d:**: im Längsschnitt durch einen Strang die Schneideinheit in unterschiedlichen Funktionsstellungen beim Abtrennen einer Scheibe,
- **Figur 4:**: einen Axialschnitt durch eine bereits teilweise von einem Strang abgetrennte Scheibe,
- **Figur 5:**: eine bekannte Bauform eines rotierenden Messers mit Anschlagplatte, betrachtet in axialer Richtung.

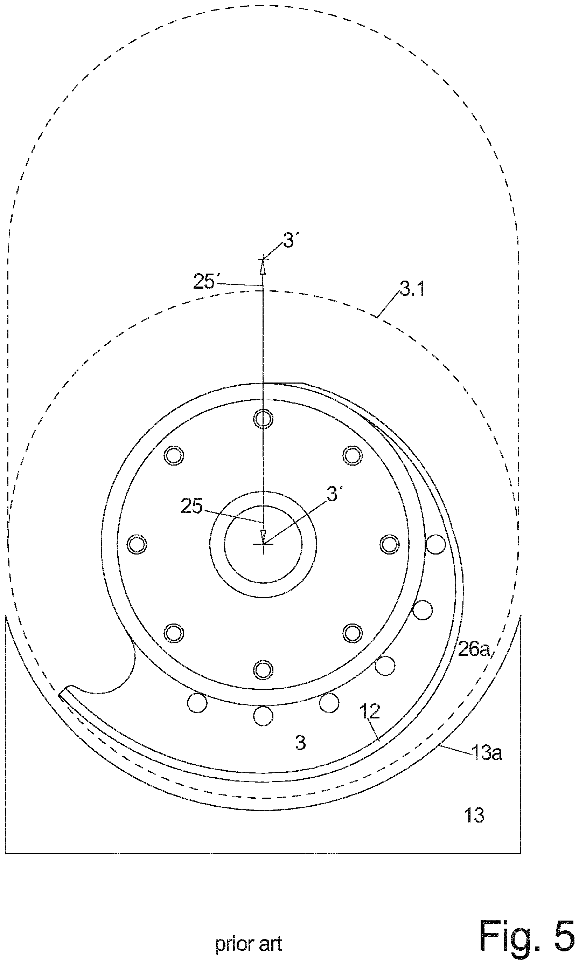

**Figur 5** zeigt - lediglich zur Verdeutlichung des der Erfindung zu Grunde liegenden Problems - ein aus dem Stand der Technik bekanntes, rotierendes sogenanntes Sichelmesser zusammen mit einer Anschlagplatte 13.

Bei einem solchen Sichelmesser ist der als Schneide 12 ausgebildete Umfangsbereich des Messers 3 nicht kreisbogenförmig um die Rotationsachse 3' des Messers 3 gestaltet, sondern verläuft mit einem vom Anfang zum Ende der Schneide kontinuierlich zunehmenden Radius zur Rotationsachse 3'.

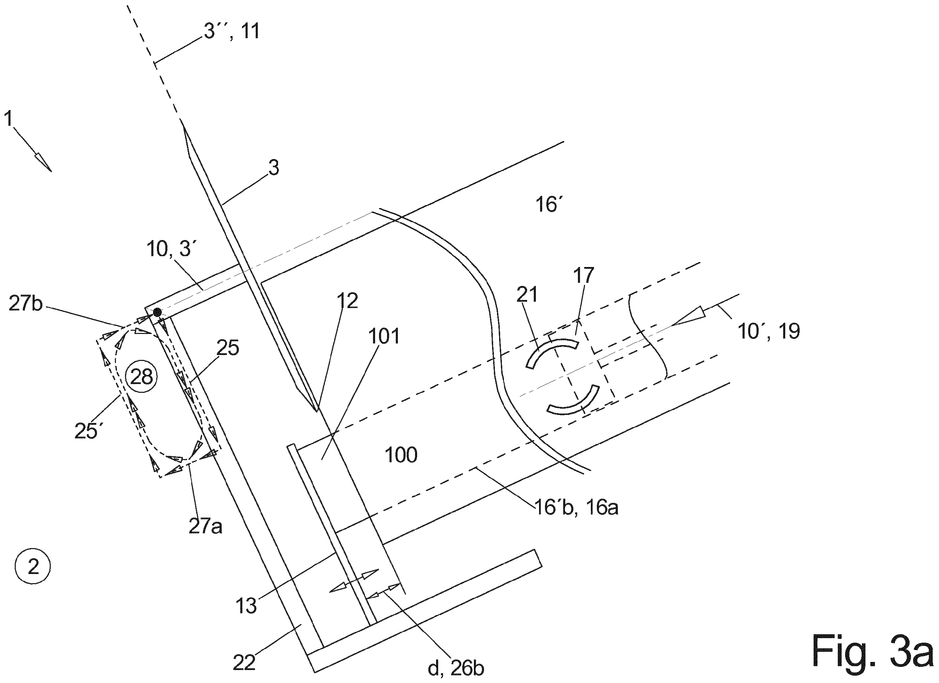

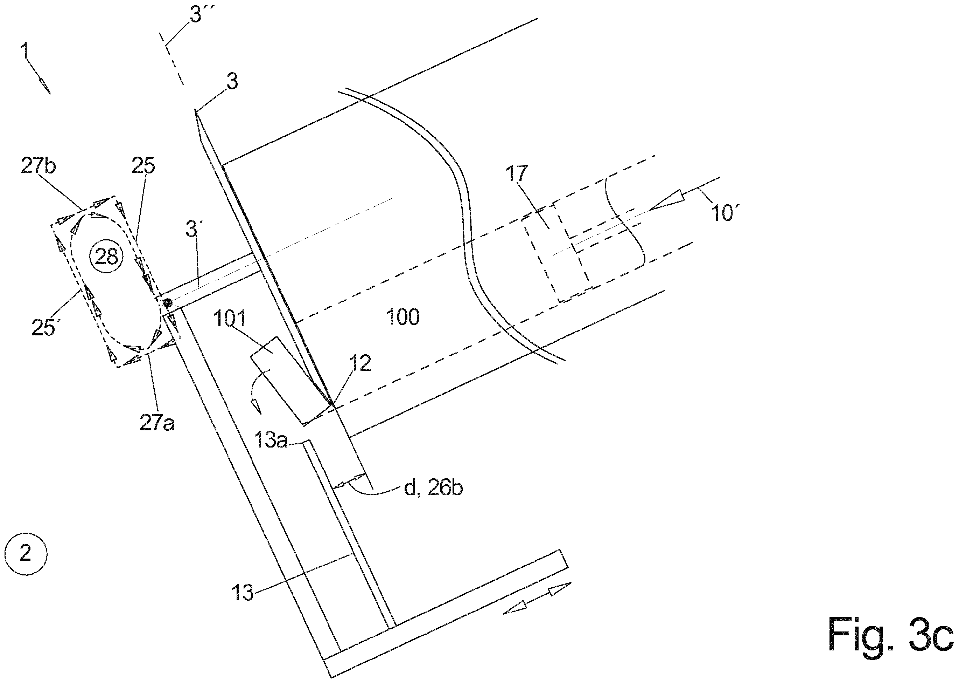

Um das Abtrennen einer Scheibe und Hindurchschieben der Scheibe beim Abtrennen durch den Spalt zwischen Messer 3 und Anschlagplatte 13 zu ermöglichen - wie in den **Figuren 3a bis 3d** dargestellt - muss die Funktionskante 13a der Anschlagplatte 13 konkav geformt etwa parallel zum Flugkreis 3.1 des sichelförmigen Messers 3 verlaufen.

Dies bewirkt jedoch, dass der Radialspalt 26a zwischen der Schneide 12 des Messers und der Funktionskante 13a der Anschlagplatte 13 an der Stelle des größten Schneiden-Radius relativ klein und in Richtung abnehmendem Schneiden-Radius immer größer wird, und dadurch ein Maß erreicht, dass das plastische Material des Produktstranges unerwünschterweise bereits vor dem Abtrennen in diesen Spalt 26 hinein vorgeschoben werden kann und damit die abgetrennten Scheiben 101 nicht mehr die gewünschte Form- und Gewichtshaltigkeit erreichen.

Zum Erreichen eines überall gleichbreiten Radialspaltes 26a ist daher ein Messer mit einer Kreissegment-förmigen Schneide zu bevorzugen, wobei dessen Systemimmanente Nachteile wie erfindungsgemäß beschrieben kompensiert werden müssen:

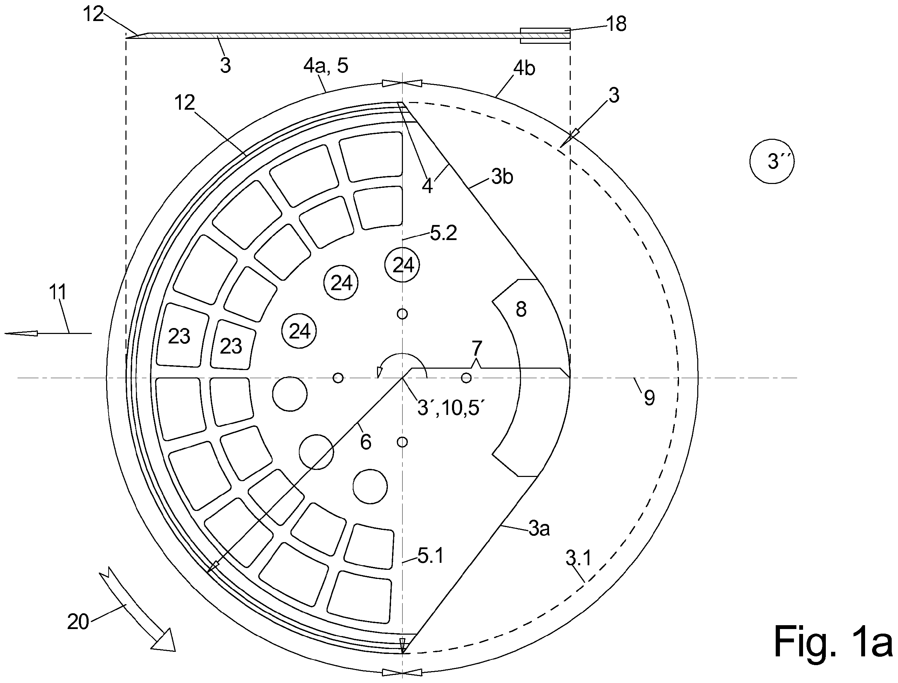

In **Figur 1a** ist eine erste Bauform eines etwa plattenförmigen Messers 3 in der Aufsicht auf die Messerebene 3' dargestellt sowie im Schnitt durch die Symmetrielinie 9, die durch die Rotationsachse 3' des Messers 3 verläuft:
Denn wie **Figur 1a** erkennen lässt, ist das Messer 3 vorzugsweise seitensymmetrisch, also spiegelbildlich, zur Symmetrielinie 9 ausgebildet.

In axialer Richtung 10, der Richtung der Rotationsachse 3' des Messers 3, betrachtet besitzt das etwa plattenförmige Messer 3 zwei verschiedene Umfangsbereiche:
Ein Teil des Umfanges ist als Kreissegment 5 abgebildet, dessen Krümmungsmittelpunkt die Rotationsachse 3' des in diesem Fall sich über 180° erstreckenden Kreissegmentes 5 ist, also der vordere Begrenzungsradius 5.1 des Kreissegmentes 5 ist gegenüber dem hinteren Begrenzungsradius 5.2 um 180° beanstandet. Begrenzungsradius bedeutet, dass derjenige Radius durch den Krümmungsmittelpunkt, die Messerachse 3', darunter zu verstehen ist, der durch Beginn bzw. Ende des Kreissegmentes verläuft.

Die Außenkante 4 als nach radial außen hin spitz zulaufende Schneide 12 ausgebildet, die in diesem Fall nur einseitig angeschliffen ist, wie die Schnittdarstellung in **Figur 1a** zeigt. Dieses Kreissegment 5 ist damit der Schneidkantenbereich 4a der Außenkante 4, während der Rest, in diesem Fall ebenfalls 180°, der Außenkante 4 der Restkantenbereich 4b ist, der nicht als Schneide ausgebildet ist.

Im gesamten Restkantenbereich 4b verläuft die Außenkante 4 innerhalb des Flugkreises 3.1 des Kreissegmentes 5, welcher hier gleichzeitig der Flugkreis des Messers 3 ist, da der Restkantenbereich 4b nicht über diesen Flugkreis vorsteht.

Vom Beginn und Ende des Kreissegmentes 5 weicht die Außenkante 4 mit zunehmender Beabstandung in Umfangsrichtung immer mehr vom Flugkreis 3.1 zurück und nähert sich der Messerachse 3' an, sodass - meist auf der Symmetrielinie 9 -der geringste radiale Abstand 7 zwischen der Außenkante 4 und der Messerachse 3' vorliegt, der nur noch 40 % bis 60 % des Krümmungsradius 6 des Kreissegmentes 5 beträgt.

In diesem Fall ist der Restkantenbereich 4b etwa dreieckig gestaltet mit einer in Richtung Symmetrielinie 9 vom Kreissegment 5 oder Schneidkantenbereich 4a abstrebenden radialen Vorderkante 3a bzw. radialen Hinterkante 3b des Kreissegmentes 5, die Geraden sind, die die Flanken der Dreiecksform dieses Restkantenbereiches 4b bilden. Im Restkantenbereich 4b ist um die Symmetrielinie 9, also im Bereich des geringsten radialen Abstandes 7, herum an dem plattenförmigen Grundkörper des Messers 3, der bis auf die Schneide 12 eine gleichbleibende Dicke aufweist, ein Bereich 8 dargestellt, in dem das Messer 3 ein erhöhtes Flächengewicht besitzt, indem auf wenigstens einer der beiden Seiten des plattenförmigen Grundkörpers des Messers in diesem Bereich ein Zusatzgewicht 18, beispielsweise aus Wolfram-Blech aufgebracht ist.

Auf der dem Fleischstrang abgewandten Hauptfläche des Messers 3, insbesondere auf der angeschlossenen Seite, sind im Schneidkantenbereich 4a radial innerhalb der Schneide 12 zum einen Vertiefungen 23 dargestellt, die das Messer 3 nicht durchdringen, sondern lediglich der Gewichtsreduzierung des Messers 3 dienen, und darüber hinaus Durchgangsbohrungen 24, die radial vorzugsweise weiter innen liegen als die Vertiefungen 23, und außer der Gewichtsreduzierung vor allem dem Auswuchten des Messers 3 dienen, denn dieses soll bei Rotation um die Rotationsachse 3 in beiden radialen Richtungen entlang der Symmetrielinie 9 die gleiche Fliehkraft entwickeln.

Sowohl die Vertiefungen 23 als auch die Durchgangsbohrungen 24 sind vorzugsweise auf einem Kreisbogen um die Rotationsachse 3' herum angeordnet.

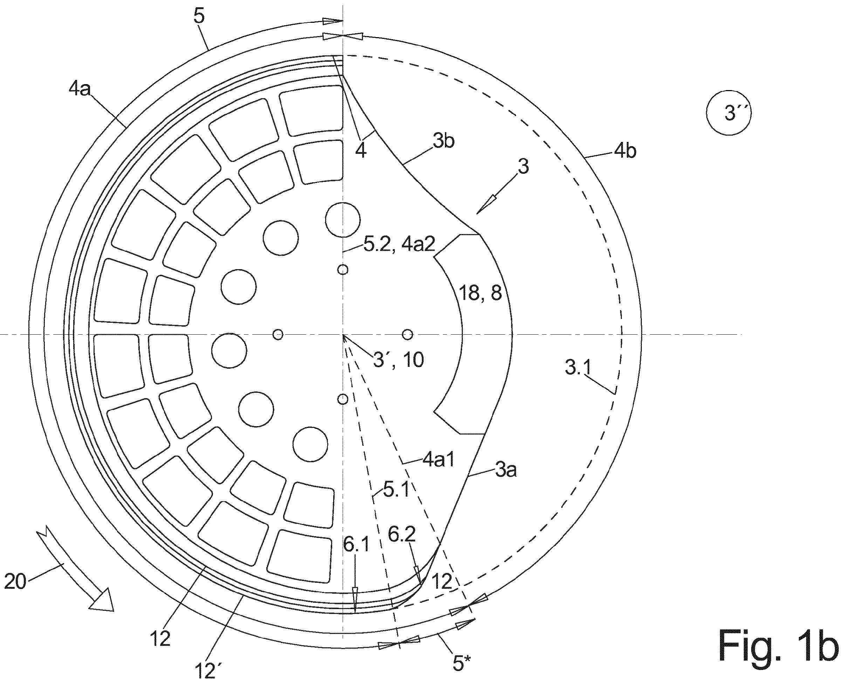

**Figur 1b** zeigt eine zweite Bauform des Messers 3, die nicht symmetrisch zu irgendeiner Linie der Messerachse 3' ist:
Zunächst fällt auf, dass das Kreissegment 5 sich hier über etwas mehr als 180° erstreckt, vor allem jedoch, dass der als Schneide 12 ausgebildete Schneidkantenbereich 4a einen größeren Winkel überdeckt als das Kreissegment 5.

Dies liegt daran, dass zwischen dem Kreissegment 5 und der in Rotationsrichtung 20 - im Einsatz des Messers 3 - radialen Vorderkante 3a des Restkantenbereiches 4b ein weiteres Winkelsegment , der Anschnittbereich 5*, als Schneide 12 ausgebildet ist, jedoch der Krümmungsradius 6.2 der dortigen Schneide 12 wesentlich geringer ist als der Krümmungsradius 6.1 im Bereich des Kreissegmentes 5, weshalb die Schneide 12 in diesem Anschnittbereich 5* bereits vom Flugkreis 3.1 nach radial innen zurückweicht.

Somit erstreckt sich die in Rotationsrichtung 20 radiale Vorderkante 3a des Schneidkantenbereiches 4a der Bestandteil des Restkantenbereiches ist, als Gerade vom Flugkreis 3.1 zunehmend zurückweichend in Richtung Mitte des Restkantenbereiches 4b.

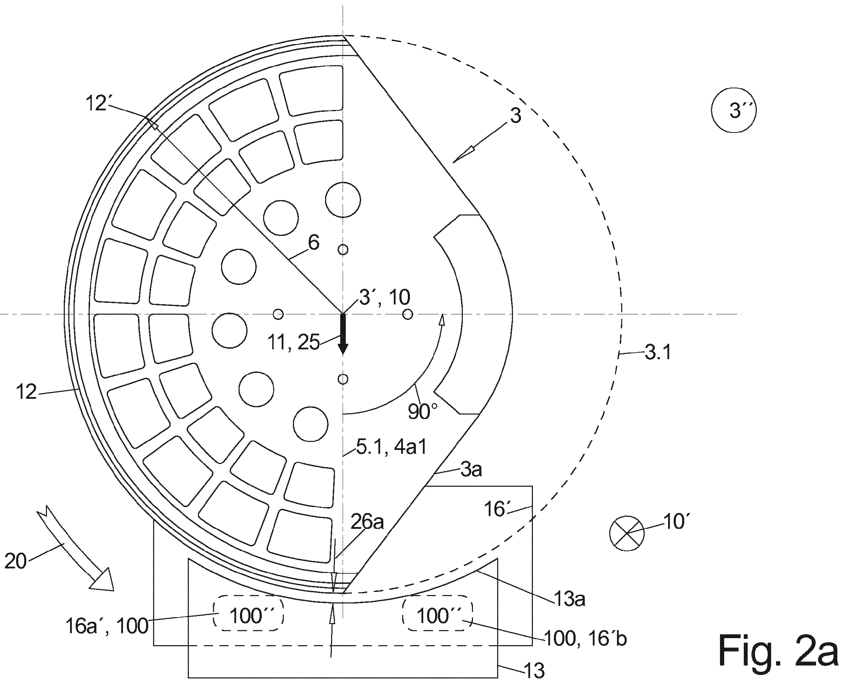

Der Anschnittbereich 5* dient dazu, dass das in Rotationsrichtung 20 drehende Messer 3 beim Eintritt in den aufzuschneidenden Strang 100 - wie anhand der **Figuren 2a bis 2h** erläutert werden wird - einen bereits sehr geringen Abstand zwischen dem Strang und der Rotationsachse 3' des Messers aufweisen kann.

Auch die in Rotationsrichtung 20 sich an das Ende des Schneidkantenbereiches 4 anschließende radiale Hinterkante 3b des Restkantenbereiches 4b ist anders gestaltet als in **Figur 1a****,** nämlich nicht als Gerade, die zu dem hinteren Begrenzungsradius 5.2 des Kreissegmentes 5 einen bestimmten Winkel einnimmt, sondern in diesem Fall als konkav gebogene Linie.

Hier wären auch andere Gestaltungen möglich, wobei das Ziel darin besteht, den Winkel zwischen dem hinteren Begrenzungsradius 5.2 des Kreissegmentes 5 und dem radial äußeren Beginn der radialen Hinterkante 3b so gering wie möglich zu halten, insbesondere dabei 0° zu erreichen. Dadurch gelangt im Schneideinsatz das Messer 3 schneller aus der Überdeckung mit dem aufzuschneidenden Fleischstrang heraus, wie im Folgenden dargelegt werden wird.

Denn die **Figuren 2a bis 2h** zeigen das Messer 3 gemäß der ersten Bauform der **Figur 1a** in unterschiedlichen Funktionsstellungen beim gleichzeitigen Abschneiden von Scheiben 101 von zwei nebeneinander liegenden Produktsträngen 100, die jeweils vollständig umschlossen in einem Führungsrohr 16' in Längsrichtung 10 verschiebbar geführt sind.

An dieser Stelle sei klargestellt, dass die Längsrichtung 10', in der sich die Produkt-Stränge 100 erstrecken und verschiebbar sind, in dem in den Ausführungsbeispielen dargestellten Fall identisch ist mit der Längsrichtung oder axialen Richtung 10 des rotierenden Messers 3, welche der Richtung dessen Rotationsachse 3' entspricht. Dies muss jedoch nicht immer der Fall sein, da von einem Produktstrang 100 Scheiben schräg zur Längsrichtung 10' des Produktstranges 100 abgeschnitten werden können.

In den **Figuren 2a bis 2h** ist ferner eine Anschlagplatte 13 vorhanden, die - wie am besten die Seitenansichten der **Figuren 3a bis 3d** zeigen - als Anschlag für den vorwärtsgeschobenen Produktstrang 100 dient und sich auf der dem Formrohr 16' gegenüberliegenden Seite der Messerebene 3" befindet und deren Abstand von der Messerebene 3" befindet und deren Abstand von der Messerebene 3" die Dicke d der abzutrennenden Scheibe 101 bestimmt.

Wie die **Figuren 2a bis 2h** zeigen befindet sich in diesem Fall die Anschlagplatte 13 in Längsrichtung 10, der axialen Richtung des Messers 3, betrachtet immer radial außerhalb des Flugkreises 3.1 des Kreissegmentes 5 und damit des Messers 3, wobei der in dieser Ansicht dem Messer 3 zugewandte Teil des Umfanges der Anschlagplatte 13, wieder deren Funktionskante 13a darstellt, die konkav ausgebildet ist mit einem Krümmungsradius, der etwas größer ist als der Krümmungsradius 6 der Schneidkante 12' der Schneide 12 entsprechend dem radialen Abstand zwischen Flugkreis 3.1 und der Funktionskante 13a, da der Krümmungsmittelpunkt der Funktionskante 13a ebenfalls die Rotationsachse 3' des Messers 3 ist.

Das Abtrennen der Scheiben 101 von den nebeneinanderliegenden Produktsträngen 100 erfolgt durch Eintauchen des rotierenden Messers 3 in Eintauchrichtung 25, die in diesem Fall quer, vorzugsweise lotrecht, zur Längsrichtung 10' der Querschnitte 100" der Fleischstränge 100, also der nebeneinanderliegenden röhrenförmigen Hohlräume in dem Formrohr 16' verläuft, vorzugsweise lotrecht auf die Verbindung der Mittelpunkte der beiden Querschnitte 100" der beiden röhrenförmigen Hohlräume 16' a, b in der Mitte.

In Eintauchrichtung 25 ist die Anschlagplatte 13 in diesem Fall fest der Rotationsachse 3' des Messers 3 verbunden, sodass betrachtet in axialer Richtung wie in den **Figuren 2a bis 2h** ein gleichbleibender, auch in Umlaufrichtung 20 gleich breiter, Radialspalt 26a zwischen der Funktionskante 13a und dem Flugkreis 3.1 verbleibt.

Da in Breitenrichtung, also der Beabstandungsrichtung zwischen den beiden nebeneinanderliegenden Hohlräumen 16'a, 16'b im Formrohr 16', nicht nur die Anschlagplatte 13 so breit ist, dass sie beide Querschnitte 100" gleichzeitig abdecken kann, sondern erst recht das Messer 3, wird also durch ein Eintauchen des Messers 3 von beiden nebeneinanderliegenden Produktsträngen 100 gleichzeitig jeweils eine Scheibe 101 abgetrennt.

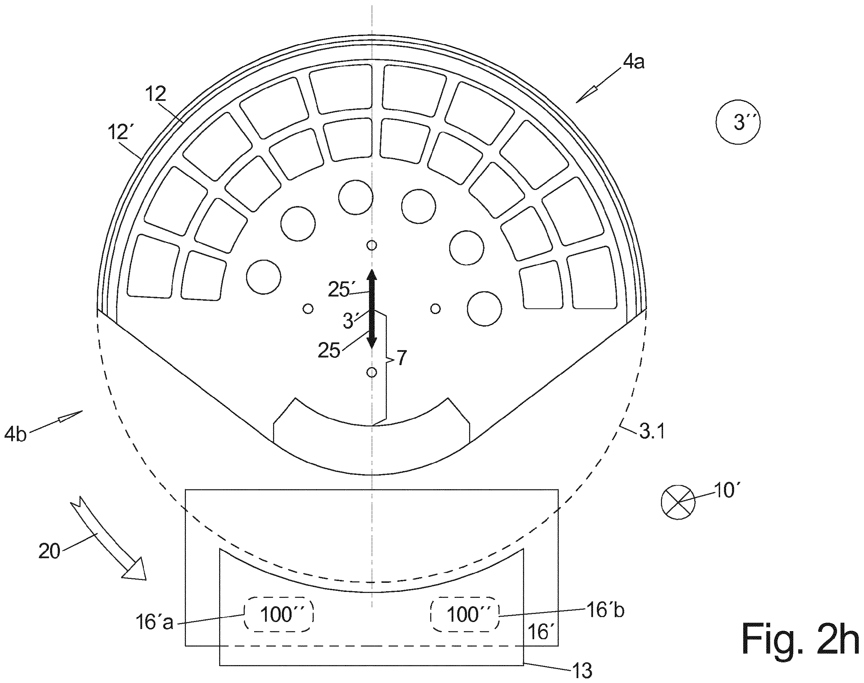

Dabei erfolgt - wie anhand der **Figuren 2a bis 2h** zu erkennen - das Eintauchen durch den gesamten Querschnitt 100 beider Hohlräume 16'a, 16'b hindurch, während weniger als einer Umdrehung des Messers 3, nämlich während der Schneidkantenbereich 4a die beiden Querschnitte 100" nur ein einziges Mal überläuft:
Hinsichtlich der Drehlage des Messers 3 wird - siehe **Figur 2h** - als 0°-Stellung, also sozusagen als Ausgangslage, diejenige Stellung betrachtet, in der der Punkt des Umfanges des Messers 3, der den geringsten Abstand 7 zu dessen Rotationsachse 3' einnimmt, in Eintauchrichtung 25 vorne liegt, also zu dem Formrohr 16'und dessen Hohlräumen 16' a, b hinweist.

Die Rotationsrichtung 20 des Messers ist im vorliegenden Fall entgegen dem Uhrzeigersinn gerichtet.

In dieser Ausgangslage deckt die Anschlagplatte 13 den Querschnitt 100" beider Hohlräume 16'a, b vollständig ab, und dementsprechend überdeckt weder das Messer 3 noch dessen Flugkreis 3.1 diese Querschnitte 100" noch verläuft dessen Flugpreis 3.1 durch diese Querschnitte 100".

Von dieser Ausgangslage aus rotiert das Messer 3 in Rotationsrichtung 20 weiter und nähert sich in Eintauchrichtung 20 diesen Querschnitten 100" und damit den Produktsträngen 100.

**Figur 2a** zeigt den Zustand nach einer Drehung des Messers 3 von 90° aus der Ausgangslage.

Dabei hat sich nicht nur das Messer 3, sondern synchron damit auch die Anschlagplatte 13 in Eintauchrichtung 25 nach unten bewegt, sodass die Anschlagplatte 13 gerade noch die Querschnitte 100" abdeckt, aber die Funktionskante 13a der Anschlagplatte 13 bereits den Rand dieser Querschnitte 100" erreicht hat.

Der vordere Begrenzungsradius 5.1 hat in Rotationsrichtung 20 den ersten Querschnitt 16'a bereits überlaufen, aber noch nicht den zweiten Hohlraum 16'b, und der Flugkreis 3.1 des Messers 3 besitzt noch einen radialen Abstand zu den Querschnitten 100".

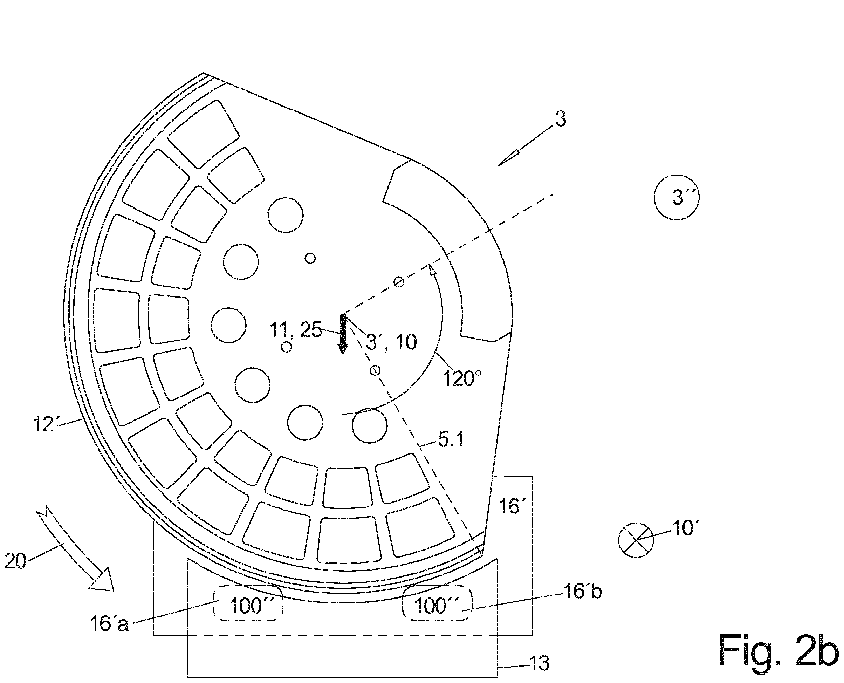

**Figur 2b** zeigt die Drehlage des Messers 3 um 30° weiter, also bei 120°.

Die Rotationsachse 3' des Messers 3 hat sich nun den Querschnitten 100" der beiden Fleischstränge 100 in Eintauchrichtung 25 soweit angenähert, dass die Schneidkante 12 und damit der Flugkreis 3.1 gerade die beiden Querschnitte 100" erreicht hat, die aufgrund des Radialspaltes 26a nunmehr auch nicht mehr vollständig von der Anschlagplatte 13 abgedeckt sind, immer betrachtet in Zufuhrrichtung 10.

Der vordere Begrenzungsschenkel 5.1 des Kreissegmentes 5 und damit in diesem Fall des Schneidkantenbereiches 4a hat in Rotationsrichtung 20 nunmehr auch den zweiten Hohlraum 16'b gerade überlaufen.

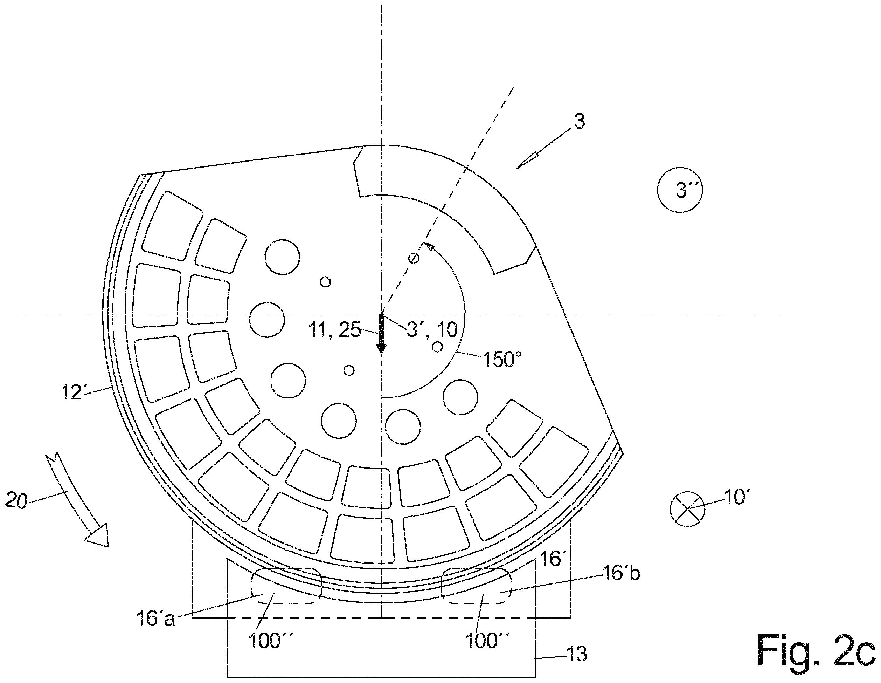

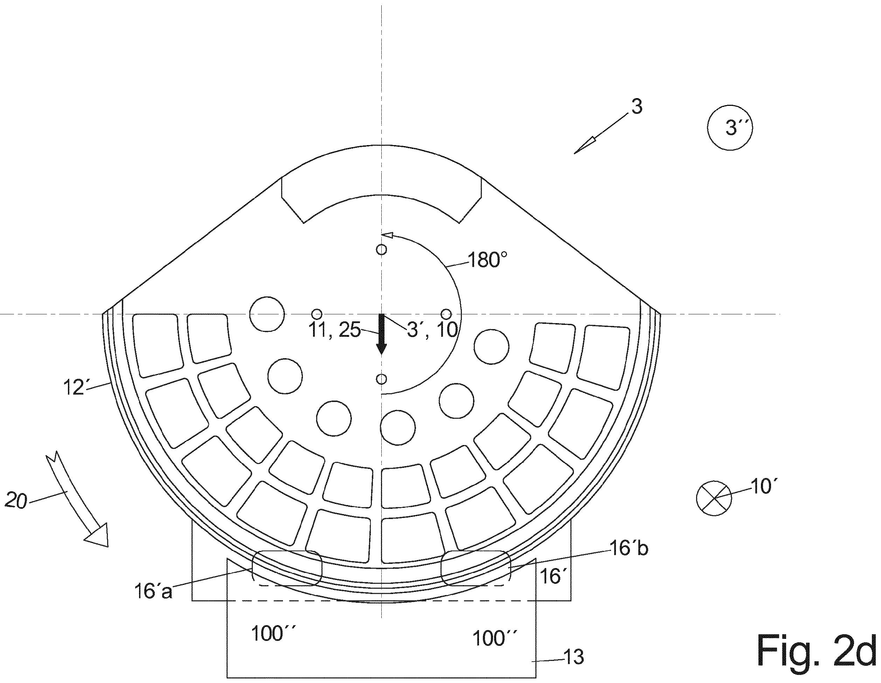

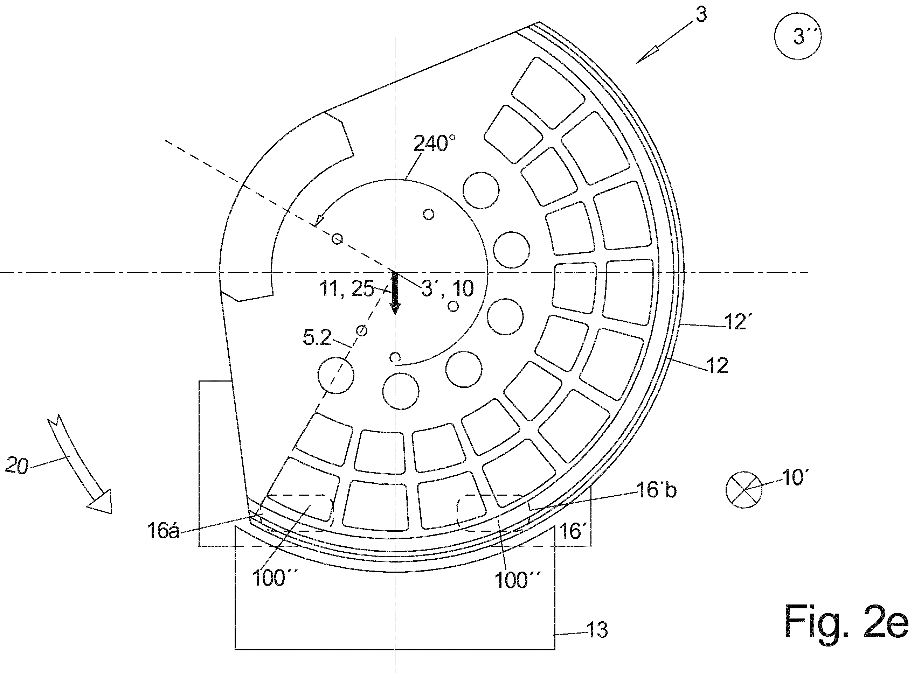

Bei Weiterdrehung des Messers 3 und zunehmender Eintauchbewegung in Eintauchrichtung 25 in die Querschnitte 100" - wie in **Figur 2c** bei 150°, **Figur 2d** bei 180° zu erkennen - durchtrennt die Schneide 12, also deren Schneidkante 12a, des Messers 3 zunehmend die Querschnitte 100" und hat sie bei einer Winkelstellung von 240° **(****Figur 2e****)** vollständig durchtrennt.

Dabei befindet sich der hintere Begrenzungsradius 5.2 des Kreissegmentes 5 in Rotationsrichtung 20 noch hinter den Querschnitten 100", hat diese also noch nicht ganz erreicht.

Die Stellung gemäß **Figur 2e** - wenn also aufgrund der Eintauchbewegung die Schneidkante 12' der Schneide 12 die Querschnitte 100" gerade beide durchtrennt hat, was etwa gleichzeitig der Fall sein sollte, da die beiden Querschnitte 100" symmetrisch zur Eintauchrichtung 25 angeordnet sein sollen, und der hintere Begrenzungsradius 5.2 des Kreissegmentes 5 die Querschnitte 100" noch nicht erreicht hat und die Anschlagplatte 13 dabei die Querschnitte 100"nicht mehr überdeckt - stellt die in Eintauchrichtung 25 maximal weit eingetauchte Stellung des Messers 3 und dessen Rotationsachse 3' dar.

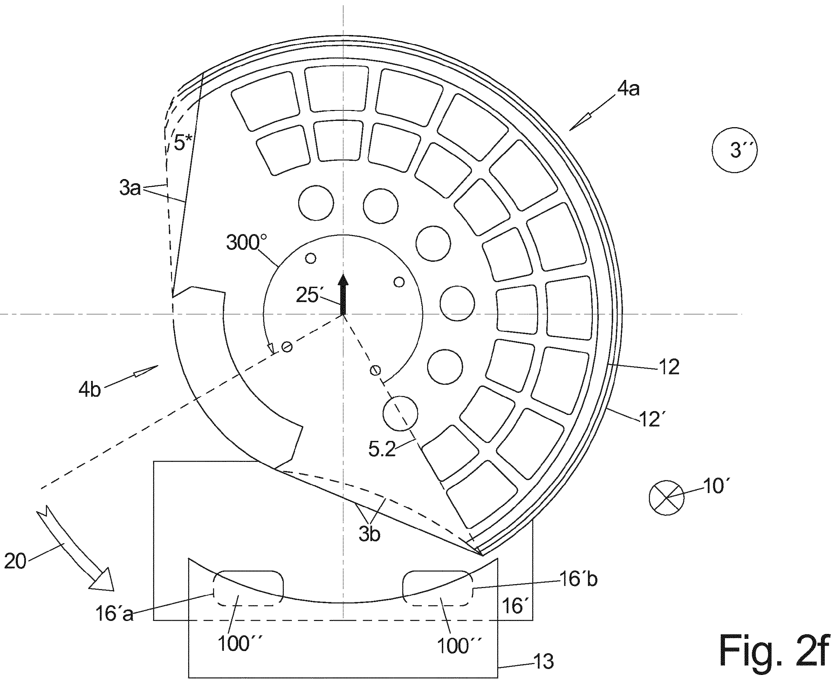

Von dieser Stellung aus wird das Messer 3 weitergedreht, aber in radialer Richtung entgegen der Eintauchrichtung 25, nämlich in der Rückzugsrichtung 25', wieder zurückgezogen, wie in **Figur 2f** bei einer Winkellage von 300° dargestellt.

Der hintere Begrenzungsradius 5.2 hat dabei beide Querschnitte 100" bereits in Rotationsrichtung 20 überlaufen, und die Anschlagplatte 13 hat sich bereits soweit in Rückzugsrichtung 25", dass sie die Querschnitte 100" bereits wieder teilweise überdeckt.

Obwohl der Flugkreis 3.1 noch durch die Querschnitte 100" hindurch verläuft, kann in dieser Lage bereits mit dem Vorwärtsschieben der in den rohrförmigen Hohlräumen 16'a, b aufgenommenen Produkt-Stränge 100 in Richtung Anschlagplatte 13 begonnen werden, da das Messer 3 die Querschnitte 100" mit den Produkt-Strängen 100, die gleichzeitig die Querschnitte der Hohlräume 16' a, b sind, nicht mehr überdeckt, aufgrund der Tatsache, dass auch die radiale Hinterkante 3b des Restkantenbereiches 4b, die sich an das in Rotationsrichtung 20 hintere Ende des Schneidkantenbereiches 4a anschließt, ebenfalls bereits beide Querschnitte 100" überlaufen hat.

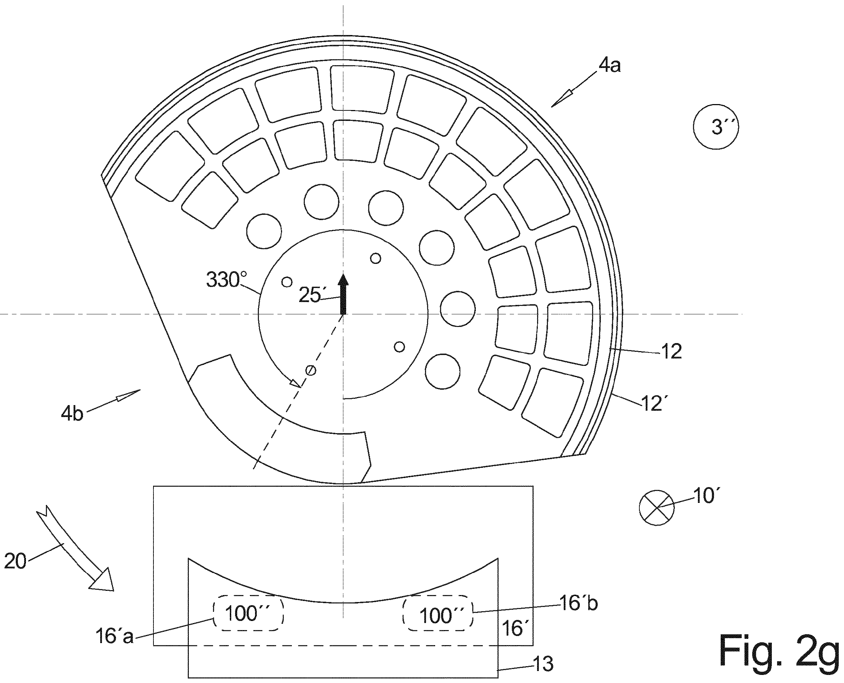

Von dieser Stellung aus wird - beispielsweise gemäß **Figur 2g** bei 330° - das Messer 3 in Rückzugsrichtung 25' weiter von den Querschnitten 100" wegbewegt und weitergedreht, bis nach weiteren 30° die Ausgangslage gemäß **Figur 2h** erreicht ist.

**Figur 2f** lässt anhand der gestrichelt eingezeichneten Kontur der zweiten Messerbauform gemäß Figur 1b auch erkennen, dass das Vorwärtsschieben der Stränge 100 noch etwas früher erfolgen kann, wenn die radiale Hinterkante 3b des Restkantenbereiches 4b aufgrund entsprechender konkaver Gestaltung den Querschnitt des zweiten Hohlraumes 16' b noch früher freigibt als bei der Gestaltung des Messers gemäß **Figur 1a****.**

Ebenso lässt **Figur 2f** anhand der gestrichelt eingezeichneten radialen Vorderkante 3a der Messerform gemäß **Figur 1b** erkennen, dass das Messer 3 erst bei einem größeren Drehwinkel als bei der Messerform gemäß Figur 1a in den 1. Hohlraum 16'a eintreten kann, wenn sich an das vordere Ende des Kreissegmentes 5 noch ein Anschnittbereich 5* mit radial nach Innen zurückweichender Schneidkante 12' anschließt.

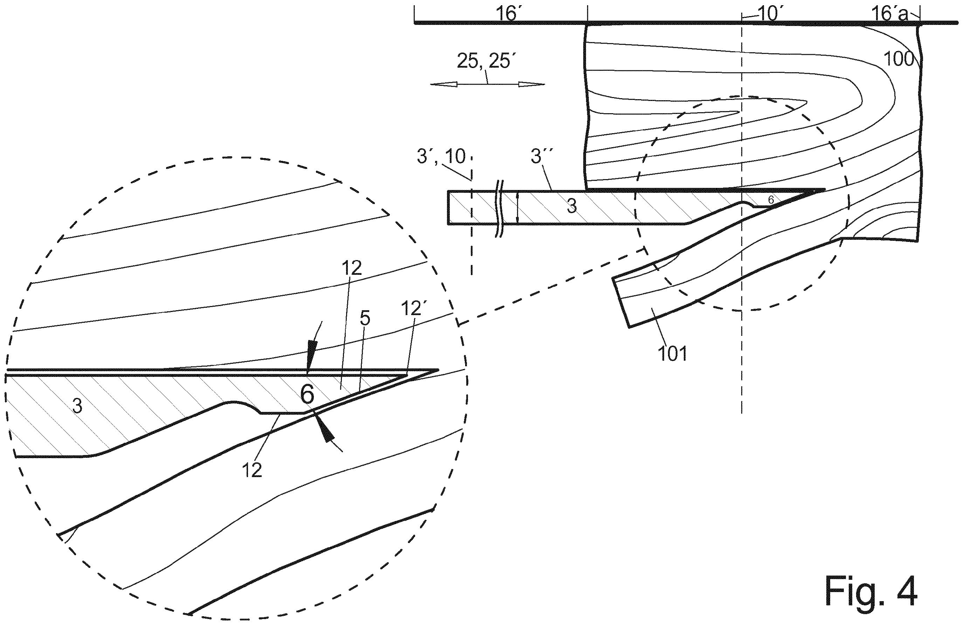

**Figur 4** zeigt in vergrößerter Darstellung einen Schnitt durch ein bereits teilweise in den Produktstrang 100 eingetauchtes Messer 3, sodass die entstehende Scheibe 101 bereits teilweise vom Produktstrang 100 abgetrennt ist.

Dabei ist gut zu erkennen, dass der plattenförmige Grundkörper des Messers 3 nur einseitig angeschliffen ist, und zwar auf der vom Fleischstrang 100 wegweisenden Seite, sodass die dem Fleischstrang 100 zugewandte Rückseite des Messers 3 die Messerebene 3" darstellt, entlang der der Abtrennvorgang durchgeführt wird.

**Figur 4** zeigt - insbesondere in der Vergrößerung - auch, dass von der Schneidkante 12' aus sich die Schrägfläche der Schneide 12 nicht durchgehend bis auf die volle Dicke des plattenförmigen Grundkörpers des Messers 3 erstreckt, sondern dazwischen im Querschnitt eine Hohlkehle ausgebildet sein kann, und insbesondere zwischen der Hohlkehle und der sich von der Schneidkante 12 wegerstreckenden Schrägfläche der Schneide 12 eine Sattelfläche im Querschnitt der Schneide 12 vorhanden sein kann, die insbesondere parallel zur ebenen Rückseite des Messers 3 verläuft.

Vorzugsweise erstreckt sich sowohl die Sattelfläche als auch die Hohlkehle in Umfangsrichtung entlang der gesamten Schneide 12, zumindest entlang des gesamten Kreissegmentes 5 der Schneide 12. dadurch wird die Anhaftung des Messers 3 an dem zu schneidenden Produkt verringert.

Die **Figuren 3a bis 3d** zeigen unterschiedliche Funktionsstellungen der einerseits das Messer 3 und andererseits die Anschlagplatte 13 umfassenden Schneideinheit 1 in der Seitenansicht, also quer zur Eintauchrichtung 25 einerseits und der axialen Richtung 10, der Richtung der Rotationsachse 3', andererseits.

Dabei ist zunächst zu erkennen, dass in dem rohrförmigen, zumindest vorne offenen Hohlraum z.B. 16'b des Formrohres 16' mit einer unteren Auflagefläche 16a der darin befindliche Produktstrang 100 von einem Strangschieber 17, der von einem Strangantrieb 19 angetrieben wird, von seinem hinteren Ende aus in Zufuhrrichtung 10a vorgeschoben wird jeweils bis zum Anschlag an die Rückseite der Anschlagplatte 13, die sich in axialer Richtung 10 - die in diesem Fall gleichzeitig die Richtung der Rotationsachse 3 des Messers als auch die Zufuhrrichtung 10'des Stranges 100 ist - im Abstand vor dem Formrohr 16' und vor der Messerebene 3' befindet, die mit möglichst geringem Abstand, gerade noch nicht kontaktierend, vor der vorderen Stirnfläche des Formrohres 16' verläuft, und dadurch zum Messer 3 einen Axialspalt 26b einnimmt, der die Dicke d der abzutrennenden Scheibe 101 definiert.

Am vorderen Ende des Strangschiebers 17 können Greiforgane 21 vorhanden sein, die das hintere Ende des Produktstranges 100 halten und am Abheben von der Frontfläche des Strangschiebers 17 hindern.

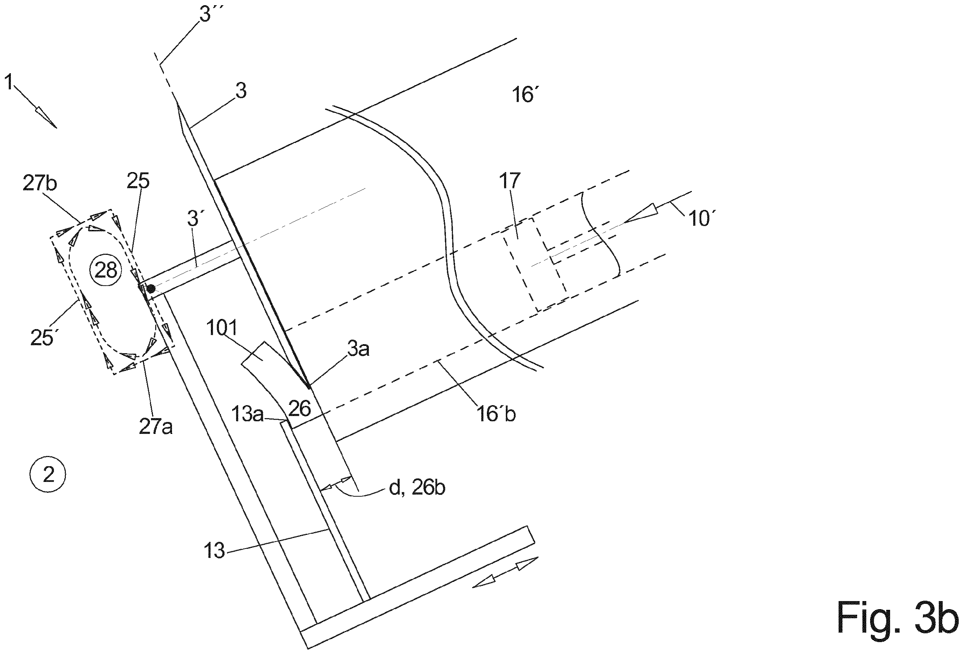

Zum Abtrennen der Scheibe 101 bewegt sich das rotierende Messer 3 - wie anhand der **Figuren 2a bis 2h** dargelegt - mit seiner Rotationsachse 3' in Eintauchrichtung 25, also in Richtung des aus dem Formrohr 16' vorstehenden einen oder auch mehreren Fleischstränge 100 (**Figur 3a**) und taucht in diesen Querschnitt des Fleischstranges ein (**Figur 3b**) und trennt damit den über das Formrohr 16' vorstehenden Teil des Produktstranges 100 zunehmend als Scheibe 101 ab, die sich dabei durch den Spalt 26 zwischen Messer 3 und Funktionskante 13a der Anschlagplatte 13 hindurchschiebt.

Wenn die Schneide 12 des Messers 3 den Produktstrang 100 vollständig durchtrennt hat, kippt die abgetrennte Scheibe 101 über die dem Messer zugewandte Funktionskante 13a der Anschlagplatte 13 nach unten aufgrund der nach vorne unten gerichteten Neigung des Formrohres 16' und fällt auf eine nicht dargestellte Ablagefläche oder einen Abförderer.

Sobald das vollständige Durchtrennen des Produktstranges 100 vollzogen ist, hebt das Messer 3 in axialer Richtung 10 in einer Abhebebewegung 27a von der vorderen Stirnfläche des Formrohres 16' weiter ab und tritt anschließend oder gleichzeitig eine Rückzugsbewegung 25' entgegen der Eintauchbewegung 25 an.

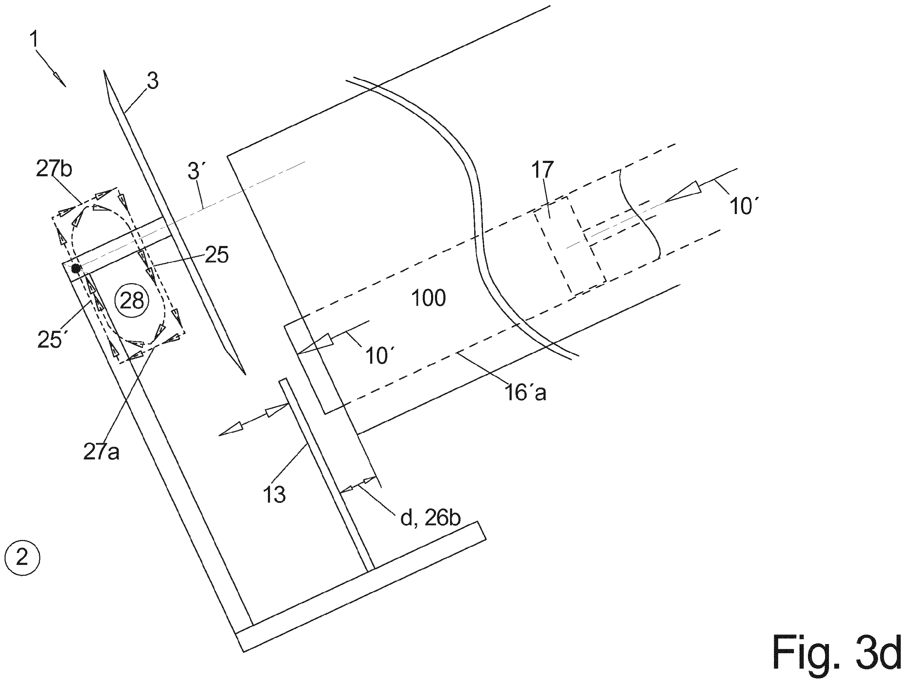

Wie die **Figur 3d** zeigt, bewirkt dies, dass mit Beginn der Abhebebewegung 27a der Strang 100 bereits weiter vorwärts geschoben werden kann über das vordere Ende des Formrohres 16' hinaus.

Während oder nach Beenden der Rückzugsbewegung 25' wird das Messer 3 entgegen der Abhebebewegung 27a axial in Anlagerichtung 27b, also in Längsrichtung 10 auf das Formrohr 16' zu, bewegt, bis es die Ausgangslage gemäß **Figur 3a** erreicht hat.

Dadurch vollzieht - in dieser Seitenansicht betrachtet - das Messer 3 eine ringförmig geschlossene, beispielsweise rechteckige oder ovale, Umlaufbewegung 28, die einen früheren Beginn der Vorschubbewegung des Fleischstranges 100 nach dem Abtrennen jeder Scheibe 101 ermöglicht und damit die Verringerung der Tot-Zeiten zwischen zwei Abtrennvorgängen.

Diese Abhebebewegung 27a und damit die Umlaufbewegung 28 wird jedoch von der Anschlagplatte 13 vorzugsweise nicht mit vollzogen, sondern diese bewegt sich mit dem Messer 3 vorzugsweise synchron nur in Eintauchrichtung 25 und Rückzugsrichtung 25', da sie ja auch während der Abhebebewegung 27a und vor allem der Anlagebewegung 27b bereits als Anschlag für den vorgeschobenen Fleischstrang 100 zur Verfügung stehen muss.

In den **Figuren 3a bis 3d** ist das Messer 3 an einem Schneidgestell 22 befestigt, indem es mit seiner Rotationsachse 3' rotierbar in dem Schneidgestell 22 aufgenommen ist, welches Bestandteil der Schneideinheit 1 ist, die an einem Grundgestell 2, symbolisiert durch die Zeichenebene, beweglich befestigt ist. Dadurch vollzieht nicht nur das Messer 3, sondern vorzugsweise das gesamte Schneidgestell 22 die beschriebene Umlaufbewegung 28.

Wenn wie dargestellt auch die Anschlagplatte 13 an dem Schneidgestell 22 befestigt ist, muss diese in axialer Richtung 10 relativ zum Schneidgestell 22 beweglich sein, auch während der einzelnen Abtrennvorgänge, nicht nur vor Beginn eines Aufschneidevorganges.

Hierfür ist ein entsprechender Antrieb und eine entsprechende Steuerung vorhanden.

### BEZUGSZEICHENLISTE

- 1: Schneideinheit
- 2: Grundgestell
- 3: Messer
- 3a: radiale Vorderkante
- 3b: radiale Hinterkante
- 3.1: Flugkreis
- 3': Rotationsachse
- 3": Messerebene
- 4: Außenkante
- 4a: Schneidkantenbereich
- 4a1: vorderer Begrenzungs-Radius
- 4a2: hinterer Begrenzungs-Radius
- 4b: Restkantenbereich
- 5: Kreissegment
- 5.1: vorderer Begrenzungs-Radius
- 5.2: hinterer Begrenzungs-Radius
- 5': Krümmungsmittelpunkt
- 6: Krümmungsradius
- 7: radialer Abstand
- 8: Bereich erhöhten Flächengewichtes,
- 9: Symmetrielinie, Durchmesserlinie
- 10: axiale Richtung, Längsrichtung
- 10': Zufuhr-Richtung, Längsrichtung der Zufuhr-Vorrichtung
- 11, 11': Querrichtung
- 12: Schneide
- 12': Schneidkante
- 13: Anschlagplatte
- 13a: Umfangsbereich, Funktionskante
- 14: Dicken-Abstand
- 15: Zufuhr-Vorrichtung
- 16: Strang-Führung
- 16a: Auflagefläche
- 16': Führungsrohr
- 16'a, b: Hohlraum
- 17: Strang-Schieber
- 18: Zusatzgewicht
- 19: Strang-Antrieb,
- 20: Rotationsrichtung
- 21: Greiforgan
- 22: Schneidgestell
- 23: Vertiefung
- 24: Durchgangsbohrung
- 25: Eintauchrichtung, Eintauchbewegung
- 25': Rückzugsrichtung, Rückzugsbewegung
- 26: Spalt
- 26a: Radialspalt
- 26b: Axialspalt
- 27a: Abheberichtung, Abhebebewegung
- 27b: Anlagerichtung, Anlagebewegung
- 28: Umlaufbewegung

- 100: Produkt-Strang
- 100": Strang-Querschnitt
- 101: Scheibe

- d: Dicke

## Patentansprüche

1. **Schneideinheit** (1) zum Abschneiden von Scheiben (101) von einem Produkt-Strang (100) mit
- einem um eine Rotationsachse (3') rotierbaren, insbesondere plattenförmigen, Messer (3),
- dessen Außenkante (4) in Richtung der Rotationsachse (3'), also in axialer Richtung (10), betrachtet über einen Schneidkantenbereich (4a) als Schneide (12) ausgebildet ist,
- wobei die Schneide (12) betrachtet in axialer Richtung (10) nur über einen Teil des Schneidkantenbereiches (4a) die Form eines Kreissegmentes (5) aufweist,
- der zwischen den Enden des Schneidkantenbereiches (4a) verlaufende Restkantenbereich (4b) der Außenkante (4) innerhalb des Flugkreises (3.1) des Kreissegmentes (5), liegt,
**dadurch gekennzeichnet, dass**
- ein Grundgestell (2) vorhanden ist, an dem die Rotationsachse (3') des Messers (3) in einer auf der axialen Richtung (10) lotrecht stehenden Querrichtung (11) beweglich angeordnet ist,

2. Schneideinheit nach Anspruch 1,
**dadurch gekennzeichnet, dass**
die Rotationsachse (3') des Messers (3) identisch mit dem Krümmungsmittelpunkt (5') des Kreissegmentes (5) des Schneidkantenbereiches (4a) ist.

3. Schneideinheit nach einem der vorhergehenden Ansprüche,
**dadurch gekennzeichnet, dass**
die Endbereiche des Schneidkantenbereiches (4a) einen geringeren Krümmungsradius (6) als das Kreissegment (5) aufweisen, insbesondere zum Ende des Schneidkantenbereiches (4a) hin einen abnehmenden Krümmungsradius (6) aufweisen.

4. Schneideinheit nach einem der vorhergehenden Ansprüche,
**dadurch gekennzeichnet, dass**
der Schneidkantenbereich (4a) und/oder das Kreissegment (5) sich über
- mindestens 100°, besser mindestens 130°, besser mindestens 150°, besser mindestens 180°, erstreckt
und/oder
- höchstens über 280°, besser höchstens über 250°, besser höchstens über 200°, besser höchstens über 180° erstreckt.

5. Schneideinheit nach einem der vorhergehenden Ansprüche,
**dadurch gekennzeichnet, dass**
- der geringste radiale Abstand (7) des Restkantenbereiches (4b) zur Rotationsachse (3') maximal 80 %, besser maximal 70 %, besser maximal 60 %, besser maximal 50 %, besser maximal 40 % des Krümmungsradius (6) des Kreissegmentes (5) beträgt
und/oder
- der Restkantenbereich (4b) an seinen Enden, also am Übergang zum Schneidkantenbereich (4a), den größten und in seinem mittleren Bereich den geringsten radialen Abstand (7) zur Rotationsachse (3') einnimmt und insbesondere der radiale Abstand (7) von den Enden zum mittleren Bereich kontinuierlich abnimmt.

6. Schneideinheit nach einem der vorhergehenden Ansprüche,
**dadurch gekennzeichnet, dass**
- betrachtet in axialer Richtung (10) das Messer (3) abseits des von dem Kreissegment (5) eingefassten Teils des plattenförmigen Messers (3) einen Bereich mit demgegenüber erhöhten, mindestens um 100 %, besser mindestens um 200 %, besser mindestens um 300 %, besser mindestens um 400 % erhöhtem Flächengewicht (8) aufweist, und
- insbesondere der Bereich des erhöhten Flächengewichtes (8) erreicht wird durch Befestigen eines Zusatz-Gewichtes (18) an dem plattenförmigen Messer-Grundkörper, wobei das Zusatzgewicht (18) vorzugsweise innerhalb des Umfanges des Messer-Grundkörpers positioniert ist.

7. Schneideinheit nach einem der vorhergehenden Ansprüche,
**dadurch gekennzeichnet, dass**
betrachtet in axialer Richtung (10) das Messer (3)
- entweder symmetrisch zu der durch die Mitte des Kreissegmentes (5) verlaufenden Durchmesserlinie (9) ausgebildet ist
- oder unsymmetrisch ausgebildet ist, insbesondere so, dass beginnend von dem im Einsatz in Rotationsrichtung (20) vorderen Ende des Schneidkantenbereiches (4a) der Restkantenbereich (4b) seinen Abstand (7) zur Rotationsachse langsamer pro Winkelgrad abnimmt als beginnend vom hinteren Ende des Schneidkantenbereiches (4a) entgegen der Rotationsrichtung (20).

8. Schneideinheit nach einem der vorhergehenden Ansprüche,
**dadurch gekennzeichnet, dass**
wenigstens entlang der durch die Rotationsachse (3') verlaufenden Symmetrielinie (9) das Messer (3) in die entgegengesetzten radialen Richtungen im rotierenden Zustand die etwa gleiche Fliehkraft aufweist.

9. Schneideinheit nach einem der vorhergehenden Ansprüche,
**dadurch gekennzeichnet, dass**
- die Rotationsachse (3') des Messers (3) an dem Grundgestell (2) beweglich angeordnet ist indem das Messer (3) in einem Schneidgestell (22) rotierbar gelagert ist, welches am Grundgestell (2) in Querrichtung (11) beweglich angeordnet ist.

10. Schneideinheit nach einem der vorhergehenden Ansprüche,
**dadurch gekennzeichnet, dass**
- die Schneideinheit (1) eine, vorzugsweise in Rotationsrichtung (3') des Messers (3) still stehende, ebenfalls am Grundgestell (2) befestigte, Anschlagplatte (13) umfasst, die
- betrachtet in axialer Richtung (10) sich wenigstens teilweise radial außerhalb, insbesondere vollständig radial außerhalb, des Flugkreises (3.1) des Kreissegmentes (5) erstreckt,
und/oder
- die Kontaktfläche der Anschlagplatte (13) parallel zur Messerebene (3") angeordnet ist oder mit dieser identisch ist,
und/oder
- die Anschlagplatte (13) an einem Schneidgestell (22), welches beweglich am Grundgestell 2 angeordnet ist, befestigt ist.

11. Schneideinheit nach einem der vorhergehenden Ansprüche,
**dadurch gekennzeichnet, dass**
- der der Rotationsachse (3') zugewandte Umfangsbereich (13a) der Anschlagplatte (13) konkav gestaltet ist und die Funktionskante (13a) bildet,
- betrachtet in Querrichtung (11) die Anschlagplatte (13) einen, insbesondere einstellbaren, Axial-Spalt (26b) zur Messerebene (3") aufweist, der die Dicke (d) der abzuschneidenden Scheibe (101) bestimmt.

12. Schneideinheit nach einem der vorhergehenden Ansprüche,
**dadurch gekennzeichnet, dass**
- die Anschlagplatte (13) bezüglich der Rotationsachse (3') des Messers (3) in Querrichtung (11) einstellbar, aber zumindest während des Betriebes der Schneideinheit (1) vorzugsweise ortsfest zur Rotationsachse (3') angeordnet ist,
und/oder
- der konkave Umfangsbereich (13a) der Anschlagplatte (13) als konkaves Kreissegment (5) gestaltet ist,
- insbesondere mit dem gleichen oder einem höchstens um 20 %, besser höchstens um 10 %, besser höchstens um 5 % vom Krümmungsradius (6) des Kreissegmentes (5) des Messers (3).abweichenden Krümmungsradius (6').

13. Schneideinheit nach einem der vorhergehenden Ansprüche,
**dadurch gekennzeichnet, dass**
- die Anschlagplatte (13) bezüglich der Rotationsachse (3') des Messers (3) in Querrichtung (11) gesteuert beweglich, insbesondere auch während des Betriebes der Schneideinheit (1) gesteuert beweglich, ausgebildet ist
und/oder
- das Messer (3) nur auf der der Anschlagplatte (13) zugewandten Seite angeschliffen ist.

14. Schneideinheit nach einem der vorhergehenden Ansprüche,
**dadurch gekennzeichnet, dass**
- die Schneideinheit (1) eine Strang-Führung (16) zum Führen des Stranges sowie einen Strang-Antrieb (19) zum Bewegen des Stranges (100) entlang der Strang-Führung (16) in Richtung Messer (3) umfasst, die insbesondere ebenfalls am Grundgestell (2) befestigt sind,
- insbesondere die Strang-Führung (16) wenigstens eine in Zufuhr-Richtung (10') verlaufende Auflagefläche (16a) für den aufzuschneidenden Strang (100) umfasst, insbesondere ein Führungsrohr (16') mit wenigstens einem umfänglich geschlossenen, wenigstens vorne offenen Hohlraum (16'a),
- die Strang-Führung (16) mit ihrem in Zufuhr-Richtung (10') vorderen Ende in Längsrichtung (10) auf der der Anschlagplatte (13) gegenüberliegenden Seite des Messers (3) endet und sich von dort vom Messer (3) weg zu ihrem hinteren Ende erstreckt.

15. Schneideinheit nach einem der vorhergehenden Ansprüche,
**dadurch gekennzeichnet, dass**
- der Strang-Antrieb (19) einen linear in Zufuhr-Richtung (10') beweglichen Strang-Schieber (17) umfasst,
- der insbesondere an seinem vorderen, dem Messer (3) zugewandten, Ende Greiforgane (21) zum Ergreifen und Festhalten des Stranges (100) aufweist.

16. Schneideinheit nach einem der vorhergehenden Ansprüche,
**dadurch gekennzeichnet, dass**
in Längsrichtung (10) betrachtet die Rotationsachse (3') des Messers (3) so angeordnet und in Querrichtung (11') zur Zufuhr-Richtung (10') so beweglich ist, dass das plattenförmige Messer (3) abhängig von seiner Lage und momentanen Position der Rotationsachse (3')
- in einer Schneidstellung den Querschnitt des zugeführten Produktstranges (100), insbesondere den Querschnitt des Hohlraumes (16'a) des Führungsrohres (16'), wenigstens teilweise, insbesondere vollständig, abdecken kann
und/oder
- in einer Vorschubstellung mit diesem Querschnitt des zugeführten Produktstranges (100), insbesondere dem Querschnitt des Hohlraumes (16'a) des Führungsrohres (16'), nicht überlappt.

17. Schneideinheit nach einem der vorhergehenden Ansprüche,
**dadurch gekennzeichnet, dass**
in Längsrichtung (10) betrachtet die Anschlagplatte (13) so angeordnet und in Querrichtung (11') zur Zufuhr-Richtung (10') so beweglich ist, dass die Anschlagplatte (13)
- in einer Schneidstellung den Querschnitt des zugeführten Produktstranges (100), insbesondere den Querschnitt des Hohlraumes (16'a) des Führungsrohres (16'), wenigstens teilweise abdecken kann
und/oder
- in einer Vorschubstellung mit diesem Querschnitt (100") mindestens teilweise, vorzugsweise vollständig, überlappt.

18. **Verfahren** zum Abschneiden von Scheiben (101) vom vorderen Ende eines vorwärts schiebbaren Produkt-Stranges (100) mittels
- eines rotierenden, insbesondere plattenförmigen, Messers (3), dessen in Richtung seiner Rotationsachse (3') betrachteten Außenkante (4) ein Kreissegment (5) um die Rotationsachse (3') umfasst, innerhalb dessen die Außenkante (4) des Messers (3) als Schneide (12) ausgebildet ist und der Rest der Außenkante (4) nicht über den Flugkreis (3.1) des Kreissegmentes (5) hinausragt,
- mittels einer Schneideinheit (1) nach einem der vorhergehenden Ansprüche, wobei
nach dem Abtrennen einer Scheibe (101)
- der Produkt-Strang (100) über die Messerebene (3") hinaus bis zum Kontakt mit einer Anschlagplatte (13) vorwärtsgeschoben wird,
- nachdem die in Rotationsrichtung (20) radiale Hinterkante (3b) des Kreissegmentes (5) des Messers (3) den Querschnitt (100") des Produkt-Stranges (100) verlassen hat,
- maximal so lange, bis die in Rotationsrichtung (20) radiale Vorderkante (3a) des Kreissegmentes (5) des Messers (3) wieder in den Querschnitt (100") des Produktstranges (100) eintaucht.
**dadurch gekennzeichnet, dass**
- der Produkt-Strang (100) über die Messerebene (3") hinaus bis zum Kontakt mit einer Anschlagplatte (13) vorwärtsgeschoben wird,noch bevor der Flugkreis (3.1) des Kreissegmentes (5) des Messers (3) den Querschnitt (100") verlassen hat.

## Claims

1. **Cutting unit** (1) for cutting slices (101) from a product strand (100) comprising
- a blade (3), rotatable about an axis of rotation (3'), which is in particular plate-shaped,
- whose outer edge (4), viewed in the direction of the axis of rotation (3'), i.e. in the axial direction (10), is embodied as a cutting edge (12) over a cutting edge region (4a),
- wherein the cutting edge (12), viewed in the axial direction (10), has the shape of a circular segment (5) only over part of the cutting edge region (4a),
- the remaining edge region (4b) of the outer edge (4) extending between the ends of the cutting edge region (4a) lies within the flight circle (3.1) of the circle segment (5),
**characterized in that**
- a base frame (2) is present, at which the axis of rotation (3') of the knife (3) is arranged movably in a transverse direction (11) perpendicular to the axial direction (10).

2. Cutting unit according to claim 1,
**characterized in that**
the axis of rotation (3') of the blade (3) is identical to the centre point of curvature (5') of the circular segment (5) of the cutting edge region (4a).

3. Cutting unit according to one of the preceding claims,
**characterized in that**
the end regions of the cutting edge region (4a) have a smaller radius of curvature (6) than the circle segment (5), in particular have a decreasing radius of curvature (6) towards the end of the cutting edge region (4a).

4. Cutting unit according to one of the preceding claims,
**characterized in that**
the cutting edge region (4a) and/or the circular segment (5) extends over
- at least 100°, preferably at least 130°, preferably at least 150°, preferably at least 180°
and/or
- not exceeding 280°, better not exceeding 250°, better not exceeding 200°, better not exceeding 180°.

5. Cutting unit according to one of the preceding claims,
**characterized in that**
- the smallest radial distance (7) of the remaining edge region (4b) from the axis of rotation (3') is at most 80%, better at most 70%, better at most 60%, better at most 50%, better at most 40% of the radius of curvature (6) of the circle segment (5)
and/or
- the remaining edge region (4b) at its ends, i.e. at the transition to the cutting edge region (4a), has the greatest and in its central region the smallest radial distance (7) from the axis of rotation (3') and in particular the radial distance (7) from the ends to the central region decreases continuously.

6. Cutting unit according to one of the preceding claims,
**characterized in that**
- viewed in the axial direction (10), the blade (3) has an area, beside the part of the plate-shaped blade (3) which is bordered by the circle segment (5), with an increased weight per unit area (8), increased at least by 100%, better at least by 200%, better at least by 300%, better at least by 400%, and
- in particular the area of the increased weight per unit area (8) is achieved by fixing an additional weight (18) to the plate-shaped blade body, the additional weight (18) preferably being positioned within the circumference of the blade body.

7. Cutting unit according to one of the preceding claims,
**characterized in that**
viewed in axial direction (10) the blade (3) is
- either symmetrical to the diameter line (9) passing through the middle of the circle segment (5)
- or asymmetrically, in particular in such a way that, starting from the front end of the cutting edge region (4a) in the direction of rotation (20) during use, the distance (7) of the remaining edge region (4b) from the axis of rotation decreases more slowly per angular degree than starting from the rear end of the cutting edge region (4a) against the direction of rotation (20).

8. Cutting unit according to one of the preceding claims,
**characterized in that**
at least along the symmetry line (9) extending through the axis of rotation (3'), the blade (3) has approximately the same centrifugal force in the opposite radial directions in the rotating state.

9. Cutting unit according to one of the preceding claims,
**characterized in that**
- the axis of rotation (3') of the blade (3) is movably arranged at the base frame (2) **in that** the blade (3) is rotatably mounted in a cutting frame (22) which is arranged at the base frame (2) movably in the transverse direction (11).

10. Cutting unit according to one of the preceding claims,
**characterized in that**
- the cutting unit (1) comprises a stop plate (13) which is also fixed to the base frame (2) and preferably stationary in the direction of rotation (3') of the blade (3), said stop plate (13)
- viewed in the axial direction (10) extends at least partially radially outside, in particular completely radially outside, the flight circle (3.1) of the circle segment (5),
and/or
- the contact surface of the stop plate (13) is arranged parallel to or identical with the blade plane (3"),
and/or
- the stop plate (13) is attached to a cutting frame (22), which is movably arranged at the base frame (2).

11. Cutting unit according to one of the preceding claims,
**characterized in that**
- the peripheral region (13a) of the stop plate (13) facing the axis of rotation (3') is concave and forms the functional edge (13a),
- viewed in the transverse direction (11) the stop plate (13) has a, in particular adjustable, axial gap (26b) relative to the blade plane (3"), which determines the thickness (d) of the disc (101) to be cut off.

12. Cutting unit according to one of the preceding claims,
**characterized in that**
- the stop plate (13) is adjustable in the transverse direction (11) with respect to the axis of rotation (3') of the blade (3), but is at least during operation of the cutting unit (1) preferably fixed relative to the axis of rotation (3')
and/or
- the concave peripheral region (13a) of the stop plate (13) is embodied as a concave circular segment (5),
- in particular with the same radius of curvature or a radius of curvature (6') deviating by not more than 20 %, better by not more than 10 %, better by not more than 5 % from the radius of curvature (6) of the segment of a circle segment (5) of the blade (3).

13. Cutting unit according to one of the preceding claims,
**characterized in that**
- the stop plate (13) is movable in a controlled manner in the transverse direction (11) with respect to the axis of rotation (3') of the blade (3), in particular also movable in a controlled manner during the operation of the cutting unit (1)
and/or
- the blade (3) is only ground on the side facing the stop plate (13).

14. Cutting unit according to one of the preceding claims,
**characterized in that**
- the cutting unit (1) comprises a strand guide (16) for guiding the strand as well as a strand drive (19) for moving the strand (100) along the strand guide (16) in the direction to the blade (3), which are in particular also fixed to the base frame (2),
- in particular the strand guide (16) comprises at least one support surface (16a) extending in the feed direction (10') for the strand (100) to be cut, in particular a guide tube (16') with at least one circumferentially closed cavity (16'a) open at least at the front,
- the strand guide (16) ends with the in its feed direction (10') front end in the longitudinal direction (10) on the side of the blade (3) opposite the stop plate (13) and extends from there away from the blade (3) to its rear end.

15. Cutting unit according to one of the preceding claims,
**characterized in that**
- the strand drive (19) comprises a strand pusher (17) which is linearly movable in the feed direction (10'),
- which, in particular at its front end facing the blade (3), has gripping members (21) for gripping and retaining the strand (100).

16. Cutting unit according to one of the preceding claims,
**characterized in that**
viewed in the longitudinal direction (10), the axis of rotation (3') of the blade (3) is movably arranged in the transverse direction (11') to the feed direction (10') in such a way that the plate-shaped blade (3), depending on its position and momentary position of the axis of rotation (3')
- in a cutting position can cover the cross-section of the fed product strand (100), in particular the cross-section of the cavity (16'a) of the guide tube (16'), at least partially, in particular completely
and/or
- in a feed position does not overlap with this cross-section of the fed product strand (100), in particular with the cross-section of the cavity (16'a) of the guide tube (16').

17. Cutting unit according to one of the preceding claims,
**characterized in that**
viewed in longitudinal direction (10) the stop plate (13) is movable arranged in transverse direction (11') to the feed direction (10') in such a way that the stop plate (13)
- in a cutting position can at least partially cover the cross-section of the fed product strand (100), in particular the cross-section of the cavity (16'a) of the guide tube (16')
and/or
- in a feed position with this cross-section (100") at least partially, preferably completely, overlaps.

18. **Method** for cutting slices (101) from the front end of a forwardly pushable product strand (100) by means of
- a rotating, in particular plate-shaped, blade (3), the outer edge (4) of which, viewed in the direction of its axis of rotation (3'), comprises a circle segment (5) around the axis of rotation (3'), within which the outer edge (4) of the blade (3) is embodied as a cutting edge (12) and the rest of the outer edge (4) does not project beyond the flight circle (3.1) of the circle segment (5),
- a cutting unit (1) according to one of the preceding claims, wherein
after cutting off a slice (101)
- the product strand (100) is pushed forward beyond the blade plane (3") until it contacts a stop plate (13),
- after the rear edge (3b) of the circle segment (5) of the blade (3), which is radial in the direction of rotation (20), has left the cross-section (100") of the product strand (100),
- at most until the front edge (3a) of the circle segment (5) of the blade (3), which is radial in the direction of rotation (20), is again immersed in the cross-section (100") of the product strand (100).
**characterized in that**
- the product strand (100) is pushed forward beyond the blade plane (3") until it comes into contact with a stop plate (13), before the flight circle (3.1) of the circle segment (5) of the blade (3) has left the cross section (100").

## Revendications

1. **Unité de coupe** (1) pour couper des tranches (101) d'un cordon de produit (100) avec
- un couteau (3), en particulier un couteau en forme de plaque (3), qui peut tourner autour d'un axe de rotation (3')
- dont le bord extérieur (4), vu dans la direction de l'axe de rotation (3'), c'est-à-dire dans la direction axiale (10), est adapté comme un bord tranchant (12) sur une zone de bord tranchant (4a),
- dans laquelle le bord tranchant (12), vue dans la direction axiale (10) uniquement sur une partie de la zone de bord tranchant (4a), a la forme d'un segment de cercle (5),
- la zone de bord résiduel (4b) du bord extérieur (4) s'étendant entre les extrémités de la zone de bord tranchant (4a) à l'intérieur du cercle de vol (3.1) du segment de cercle (5),
**caractérisé en ce que**
- il est prévu un support de base (2) sur lequel l'axe de rotation (3') du couteau (3) est disposé de manière à pouvoir être déplacé dans une direction transversale (11) perpendiculaire à la direction axiale (10).

2. Unité de coupe selon la revendication 1,
**caractérisée en ce que**
l'axe de rotation (3') du couteau (3) est identique au centre de courbure (5') du segment de cercle (5) de la zone de bord tranchant (4a).

3. Unité de coupe selon l'une des revendications précédentes,
**caractérisée en ce que**
les zones d'extrémité de la zone de bord tranchant (4a) ont un rayon de courbure (6) plus petit que le segment de cercle (5), en particulier vers l'extrémité de la zone de bord tranchant (4a), elles ont un rayon de courbure (6) décroissant.

4. Unité de coupe selon l'une des revendications précédentes,
**caractérisée en ce que**
la zone de bord tranchant (4a) et/ou le segment de cercle (5)
- s'étend sur au moins 100°, mieux sur au moins 130°, mieux sur au moins 150°, mieux sur au moins 180°,
et/ou
- s'étend au maximum sur 280°, mieux sur au maximum 250°, mieux sur au maximum 200°, mieux sur au maximum 180°.

5. Unité de coupe selon l'une des revendications précédentes,
**caractérisée en ce que**
- la plus petite distance radiale (7) de la zone de bord résiduel (4b) par rapport à l'axe de rotation (3') est au maximum de 80%, mieux de 70%, mieux de 60%, mieux de 50%, mieux de 40% du rayon de courbure (6) du segment de cercle (5)
et/ou
- la zone de bord résiduel (4b) présente à ses extrémités, c'est-à-dire à la transition vers la zone de bord tranchant (4a), la plus grande distance radiale et dans sa région centrale la plus petite distance radiale (7) par rapport à l'axe de rotation (3') et en particulier **en ce que** la distance radiale (7) diminue continuellement des extrémités à la région centrale.

6. Unité de coupe selon l'une des revendications précédentes,
**caractérisée en ce que**
- vu dans la direction axiale (10), le couteau (3) présente, à l'écart de la partie du couteau (3) en forme de plaque entourée par le segment de cercle (5), une zone avec, en comparaison, une augmentation, au moins de 100 %, mieux d'au moins 200 %, mieux d'au moins 300 %, mieux présente une augmentation d'au moins 400 % du poids par unité de surface (8), et
- en particulier la zone de l'augmentation du poids par unité de surface (8) est obtenue en fixant un poids supplémentaire (18) sur le corps de base de couteau en forme de plaque, le poids supplémentaire (18) étant de préférence positionné dans la circonférence du corps de base de couteau.

7. Unité de coupe selon l'une des revendications précédentes,
**caractérisée en ce que**
vu dans la direction axiale (10), le couteau (3)
- est adapté soit symétrique par rapport à la ligne de diamètre (9) passant par le centre du segment de cercle (5),
- soit adapté asymétrique, en particulier de telle sorte que, en partant de l'extrémité avant de la zone de bord tranchant (4a) dans la direction de rotation (20) pendant l'utilisation, la distance (7) de la zone de bord résiduel (4b) par rapport à l'axe de rotation diminue plus lentement par degré angulaire qu'en partant de l'extrémité arrière de la zone de bord tranchant (4a) dans la direction opposé au sens de rotation (20).

8. Unité de coupe selon l'une des revendications précédentes,
**caractérisée en ce que**
au moins le long de la ligne de symétrie (9) passant par l'axe de rotation (3'), le couteau (3) a approximativement la même force centrifuge dans les directions radiales opposées à l'état de rotation.

9. Unité de coupe selon l'une des revendications précédentes,
**caractérisée en ce que**
- l'axe de rotation (3') du couteau (3) est disposé de manière mobile sur le support de base (2) **en ce que** le couteau (3) est monté de manière rotative dans un support de coupe (22), qui est disposé sur le support de base (2) de manière à pouvoir être déplacé dans la direction transversale (11).

10. Unité de coupe selon l'une des revendications précédentes,
**caractérisée en ce que**
- l'unité de coupe (1) comprend une plaque de butée (13), de préférence fixe dans la direction de rotation (3') du couteau (3), également fixée au support de base (2), qui,
- vue dans la direction axiale (10), s'étend au moins partiellement radialement à l'extérieur, en particulier complètement radialement à l'extérieur, du cercle de vol (3.1) du segment de cercle (5),
et/ou
- la surface de contact de la plaque de butée (13) est disposée parallèlement au plan du couteau (3") ou est identique à celui-ci,
et/ou
- la plaque de butée (13) est fixée à un support de coupe (22) qui est disposé de manière mobile sur le support de base (2).

11. Unité de coupe selon l'une des revendications précédentes,
**caractérisée en ce que**
- la zone périphérique (13a) de la plaque de butée (13) tournée vers l'axe de rotation (3') est de forme concave et forme le bord fonctionnel (13a),
- la plaque de butée (13) présente, vue dans la direction transversale (11), une fente axiale (26b), en particulier réglable, par rapport au plan de coupe (3"), qui détermine l'épaisseur (d) de la tranche (101) à couper.

12. Unité de coupe selon l'une des revendications précédentes,
**caractérisée en ce que**
- la plaque de butée (13) est réglable dans la direction transversale (11) par rapport à l'axe de rotation (3') du couteau (3), mais au moins pendant le fonctionnement de l'unité de coupe (1), elle est de préférence disposée dans une position fixe par rapport à l'axe de rotation (3'),
et/ou
- la zone périphérique concave (13a) de la plaque de butée (13) est adaptée comme un segment de cercle concave (5),
- en particulier avec le même ou avec un rayon de courbure (6') qui dévie au maximum de 20%, mieux de 10%, mieux de 5% du rayon de courbure (6) du segment de cercle (5) du couteau (3).

13. Unité de coupe selon l'une des revendications précédentes,
**caractérisée en ce que**
- la plaque de butée (13) est réalisée de manière à pouvoir être déplacée de manière contrôlée par rapport à l'axe de rotation (3') du couteau (3) dans la direction transversale (11), en particulier également de manière contrôlée pendant le fonctionnement de l'unité de coupe (1),
et/ou
- le couteau (3) est affûté uniquement sur le côté tourné vers la plaque de butée (13).

14. Unité de coupe selon l'une des revendications précédentes,
**caractérisée en ce que**
- l'unité de coupe (1) comprend un guidage de cordon (16) pour le guidage du cordon ainsi qu'un entraînement de cordon (19) pour le déplacement du cordon (100) le long du guidage de cordon (16) en direction du couteau (3), qui sont en particulier également fixés sur le support de base (2),
- le guidage de cordon (16) présente en particulier au moins une surface d'appui (16a) s'étendant dans la direction d'avance (10') pour le cordon (100) à couper, en particulier un tube de guidage (16') avec au moins une cavité (16'a) fermée sur la circonférence et ouverte au moins à l'avant,
- le guidage de cordon (16) se termine par son extrémité avant dans la direction de l'avance (10') dans la direction longitudinale (10) sur le côté du couteau (3) opposé à la plaque de butée (13) et s'étend de là en s'éloignant du couteau (3) jusqu'à son extrémité arrière.

15. Unité de coupe selon l'une des revendications précédentes,
**caractérisée en ce que**
- l'entraînement du cordon (19) comprend un pousseur de cordon (17) qui est mobile linéairement dans la direction d'avance (10'),
- et présente des membres de saisissement (21) pour saisir et maintenir le cordon (100), en particulier à son extrémité avant tournée vers le couteau (3).

16. Unité de coupe selon l'une des revendications précédentes,
**caractérisée en ce que,**
vu dans la direction longitudinale (10), l'axe de rotation (3') du couteau (3) est disposé et est mobile dans la direction transversale (11') à la direction d'avance (10') de telle sorte que le couteau (3) en forme de plaque, en fonction de sa position et de la position instantanée de l'axe de rotation (3')
- dans une position de coupe, peut recouvrir la section transversale du cordon de produit alimenté (100), en particulier la section transversale de la cavité (16'a) du tube de guidage (16'), au moins partiellement, en particulier complètement,
et/ou
- dans une position d'avance ne chevauche pas cette section transversale du cordon de produit (100) fourni, en particulier la section transversale de la cavité (16'a) du tube de guidage (16').

17. Unité de coupe selon l'une des revendications précédentes,
**caractérisée en ce que,**
vue dans la direction longitudinale (10), la plaque de butée (13) est disposée et est mobile dans la direction transversale (11') par rapport à la direction d'avance (10') de telle manière que la plaque de butée (13)
- peut recouvrir au moins partiellement la section transversale du cordon de produit (100) alimenté, en particulier la section transversale de la cavité (16'a) du tube de guidage (16'), dans une position de coupe,
et/ou
- chevauche au moins partiellement, de préférence complètement, ladite section transversale (100") dans une position d'avance.

18. **Procédé** pour découper des tranches (101) de l'extrémité avant d'un cordon de produit (100) pouvant être déplacé vers l'avant au moyen
- d'un couteau (3) rotatif, en particulier en forme de plaque, dont le bord extérieur (4), vu dans la direction de son axe de rotation (3'), comprend un segment de cercle (5) autour de l'axe de rotation (3'), segment à l'intérieur duquel le bord extérieur (4) du couteau (3) est formé en tant que tranchant (12) et le reste du bord extérieur (4) ne s'étend pas sur le cercle de vol (3.1) du segment de cercle (5),
- au moyen d'une unité de coupe (1) selon l'une des revendications précédentes, dans laquelle,
après avoir coupé une tranche (101),
- le cordon de produit (100) est poussé vers l'avant au-delà du plan du couteau (3") jusqu'à ce qu'il entre en contact avec une plaque de butée (13),
- après que le bord arrière (3b) du segment de cercle (5) du couteau (3), lequel bord arrière (3b) est radial dans la direction de rotation (20), a quitté la section transversale (100") du cordon de produit (100),
- au plus jusqu'à ce que le bord avant (3a) du segment de cercle (5) du couteau (3), lequel bord avant (3a) est radial dans la direction de rotation (20), plonge à nouveau dans la section transversale (100") du cordon de produit (100),
**caractérisé en ce que**
- le cordon de produit (100) est poussé vers l'avant au-delà du plan du couteau (3") jusqu'à ce qu'il entre en contact avec une plaque de butée (13), avant même que le cercle de vol (3.1) du segment de cercle (5) du couteau (3) ait quitté la section transversale (100").
